# EUROPÄISCHE PATENTSCHRIFT

(11) **EP 2 980 051 B1**
(45) Veröffentlichungstag und Bekanntmachung des Hinweises auf die Patenterteilung: **13.03.2019**
(21) Anmeldenummer: 14179443.8
(22) Anmeldetag: 01.08.2014
(51) Int. Cl.: C04B 41/88, C03C 17/10, C04B 41/00, C04B 41/51

(54) **Erzeugung einer Dekorschicht auf keramischen Oberflächen**
Creation of a decorative layer on ceramic surfaces
Production d'une couche décorative sur des surfaces en céramique

(43) Veröffentlichungstag der Anmeldung: 03.02.2016
(73) Patentinhaber: Heraeus Deutschland GmbH & Co. KG, 63450 Hanau (DE)
(72) Erfinder: Behl, Susanne, 63776 Mömbris-Königshofen (DE); Kraemer, Peter, 63674 Altenstadt (DE); Dr. Boldt, Kai-Ulrich, 63450 Hanau (DE)
(74) Vertreter: Heraeus IP

(56) Entgegenhaltungen:
- EP-A1- 2 128 113
- WO-A1-2014/037597

## Beschreibung

Die Erfindung betrifft eine Mischung enthaltend (i) ein Goldthiolat, (ii) eine Rhodium(III)-Verbindung und (iii) ein Lösungsmittel, das 4-10 Kohlenstoffatome und wenigstens eine OH-Gruppe aufweist, wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist.

Die Erfindung betrifft ferner ein Verfahren zur Herstellung eines Schichtaufbaus beinhaltend die Schritte: (a) Bereitstellung einer Mischung enthaltend (i) ein Goldthiolat, (ii) eine Rhodium(III)-Verbindung und (iii) ein Lösungsmittel, das 4-10 Kohlenstoffatome und wenigstens eine OH-Gruppe aufweist, wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist, (b) Aufbringen der Mischung durch eine Düse auf ein Substrat (4) unter Erhalt eines Vorläufers und (c) Erhitzen des Vorläufers auf eine Temperatur von über 200 °C unter Erhalt des Schichtaufbaus.

Aus dem Stand der Technik sind Mischungen, die ein Goldthiolat enthalten, bekannt. Diese können zur Dekoration von Substraten verwendet werden, indem sie auf eine Substratoberfläche appliziert und anschließend eingebrannt werden (siehe zum Beispiel US 3,391,010 A, DE 1421865 A und DE 4122131 C1). Es besteht zunehmend der Wunsch, Dekorpräparate durch Applikation mittels Düse, so zum Beispiel durch Tintenstrahldruck, aufzutragen. Dabei hat sich herausgestellt, dass bei einer Applikation mittels Düse, insbesondere beim Tintenstrahldrucken, der aus dem Stand der Technik bekannten Mischungen die darin enthaltenen Goldthiolate an den Metallteilen des Applikators, zum Beispiel des Tintenstrahldruckers, die mit den Mischungen in Kontakt kommen, reduziert werden. Dies hat eine Belegung der Metallteile des Applikators mit Gold zur Folge. Durch diese fehlende Korrosionsbeständigkeit kommt es zu einer Verschmutzung des Applikators, wodurch dieser letztlich unbrauchbar wird. Ferner steht die an den Metallteilen des Applikators abgeschiedene Menge an Gold nicht mehr zur Dekoration der Substrate zur Verfügung, was sich nachteilig auf das hergestellte Dekor auswirkt. Darüber hinaus hat sich gezeigt, dass diese Mischungen beim Einbrand oft zu einer matten purpurfarbenen, statt zur gewünschten glänzenden Schicht führen. Viele der aus dem Stand der Technik bekannten Mischungen haben ferner das Problem, dass es bei der Lagerung zumindest zu einer teilweisen Entmischung kommt. Derart instabile Mischungen sind für die Applikation durch eine Düse, insbesondere mittels Tintenstrahldrucker, ebenfalls nicht geeignet.

Alternative Verfahren zur Dekoration von Substraten sind aus dem Stand der Technik ebenfalls bekannt. So wird in der WO 00/73540 A1 ein Prozess beschrieben, bei dem wässrige Goldlösung zur Abscheidung von Gold in einem galvanischen Goldbad verwendet wird. Weiterhin wird in der WO 00/10941 A1 eine wässrige Lösung einer Goldthiolatverbindung auf eine Keramik aufgebracht, um durch Erhitzen ein farbiges Dekor zu erzielen.

Ferner werden in EP 2 128 113 A Goldverbindungen auf Basis cycloaliphatischer Mercaptoester in nicht-flüssigen Edelsmetallfarben beschrieben.

In WO 2014/037597 A sind außerdem Zusammensetzungen offenbart, die metallorganische Verbindungen enthalten und die in Tintenstrahldruckern Verwendung finden können. Allgemein liegt eine Aufgabe der vorliegenden Erfindung darin, die sich aus dem Stand der Technik ergebenden Nachteile zumindest teilweise zu überwinden.

Eine Aufgabe besteht darin, eine goldhaltige Mischung zur Dekoration von Substraten bereitzustellen, die mittels einer Düse, zum Beispiel mit einem Tintenstrahldrucker, applizierbar ist.

Eine weitere Aufgabe besteht darin, eine goldhaltige Mischung zur Dekoration von Substraten bereitzustellen, die mittels einer Düse, zum Beispiel mit einem Tintenstrahldrucker, applizierbar ist, ohne dass es dabei zur Abscheidung von Gold auf Teilen des Applikators, zum Beispiel dem Tintenstrahldrucker, kommt.

Eine weitere Aufgabe besteht darin, eine goldhaltige Mischung zur Dekoration von Substraten bereitzustellen, die mittels einer Düse, zum Beispiel mit einem Tintenstrahldrucker, applizierbar ist, wobei es weder zur Abscheidung von Gold auf Teilen des Applikators, zum Beispiel dem Tintenstrahldrucker, noch zu einer Entmischung bei der Lagerung kommt.

Eine weitere Aufgabe besteht darin, eine goldhaltige Mischung zur Dekoration von Substraten bereitzustellen, die einen sauberen Abbrand der organischen Anteile der Mischung gewährleistet.

Eine weitere Aufgabe besteht darin, eine goldhaltige Mischung zur Dekoration von Substraten bereitzustellen, die einen auf Gold basierenden, insbesondere goldenen, gelben oder weißgoldenen Glanz auf dem Substrat erzeugt.

Eine weitere Aufgabe besteht darin, ein Verfahren bereitzustellen, das eine genaue Dosierung einer Goldverbindung auf einem Substrat erlaubt.

Außerdem besteht eine Aufgabe darin, ein effizientes und preisgünstiges Verfahren zur Herstellung eines Schichtaufbaus bereitzustellen.

Eine weitere Aufgabe besteht darin, ein möglichst umweltverträgliches Verfahren zur Herstellung eines Schichtaufbaus mit einer auf Gold basierenden Schicht, insbesondere einer Goldschicht, einer gelben Schicht oder einer Weißgoldschicht bereitzustellen.

Darüber hinaus besteht eine Aufgabe darin, einen Schichtaufbau mit einer auf Gold basierenden Schicht, insbesondere einer Goldschicht, einer gelben Schicht oder einer Weißgoldschicht versehen zu können, deren Dicke in großen Bereichen variierbar ist.

Weiterhin besteht eine Aufgabe darin, ein Verfahren bereitzustellen, um einen Schichtaufbau mit einer möglichst gut haftenden, auf Gold basierenden Beschichtung, insbesondere einer Goldbeschichtung, einer gelben Beschichtung oder einer Weißgoldbeschichtung herzustellen.

Es ist weiterhin eine Aufgabe, einen Schichtaufbau mit einer möglichst glänzenden Oberfläche herstellen zu können.

Ein erster Gegenstand der vorliegenden Erfindung ist eine Mischung enthaltend
(i) ein Goldthiolat,
(ii) eine Rhodium(III)-Verbindung und
(iii) ein Lösungsmittel, das 4-10 Kohlenstoffatome und wenigstens eine OH-Gruppe aufweist,
dadurch gekennzeichnet, dass die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist.

Die Mischung enthält ein Goldthiolat (i). Unter Goldthiolat ist jede Goldverbindung zu verstehen, die Gold und einen Thiolatrest enthält. Ein Thiolatrest ist dabei ein Rest, der einen an Schwefel gebundenen organischen Rest enthält. Gold kann im Goldthiolat in jeder möglichen Oxidationsstufe enthalten sein. Vorzugsweise handelt es sich bei dem Goldthiolat um ein Gold(I)-thiolat.

Das Goldthiolat ist vorzugsweise aus der Gruppe ausgewählt, die aus aliphatischen Goldthiolaten, heteroaliphatischen Goldthiolaten und aromatischen Goldthiolaten besteht.

Unter aliphatischen Goldthiolaten sind alle Goldthiolate zu verstehen, die Gold und einen thioaliphatischen Rest aufweisen. Der thioaliphatische Rest umfasst neben einer Thiogruppe wenigstens eine aliphatische Gruppe. Vorzugsweise enthält der thioaliphatische Rest keine aromatische Gruppe. Die aliphatischen Goldthiolate können zyklisch oder azyklisch sein. Gemäß einer bevorzugten Ausführungsform ist das aliphatische Goldthiolat aus der Gruppe ausgewählt, die aus Goldalkylthiolaten besteht. Bei den Goldalkythiolaten kann es sich zum Beispiel um Goldcycloalkylthiolate handeln. Gemäß einer Ausführungsform handelt es sich bei den aliphatischen Goldthiolaten um zyklische Terpenthiolate. Gemäß einer weiteren bevorzugten Ausführungsform ist das aliphatische Goldthiolat aus der Gruppe ausgewählt, die aus primären, sekundären oder tertiären aliphatischen Goldthiolaten besteht. Unter sekundärem aliphatischen Goldthiolat ist ein aliphatisches Goldthiolat zu verstehen, das in α-Stellung zur Thiolgruppe des Thiolatrestes ein sekundäres Kohlenstoffatom aufweist. Unter tertiärem aliphatischen Goldthiolat ist ein aliphatisches Goldthiolat zu verstehen, das in α-Stellung zur Thiolgruppe des Thiolatrestes ein tertiäres Kohlenstoffatom aufweist. Das aliphatische Goldthiolat ist vorzugsweise aus der Gruppe ausgewählt, die aus Gold(I)-tert-butylthiolat, Gold(I)-tert-amylthiolat, Gold(I)-tert-octylthiolat, Gold(I)-tert-nonylthiolat, Gold(I)-tert-dodecylthiolat, Gold(I)-tetradecylthiolat, Gold(I)-tert-hexadecylthiolat und Gold(I)-pinanylthiolat besteht.

Unter heteroaliphatischen Goldthiolaten sind alle Goldthiolate zu verstehen, die Gold und einen thioheteroaliphatischen Rest aufweisen. Der thioheteroaliphatische Rest umfasst neben einer Thiogruppe und einer aliphatischen Gruppe eine weitere funktionelle Gruppe, die wenigstens ein Heteroatom enthält. Bei diesem Heteroatom handelt es sich vorzugsweise um ein Sauerstoffatom oder ein Stickstoffatom. Diese funktionelle Gruppe kann zum Beispiel aus der Gruppe ausgewählt sein, die aus einer Carboxylgruppe, einer Carbonsäureestergruppe, einer Ketogruppe, einer Aldehydgruppe, einer Hydroxygruppe, einer Amidgruppe und einer Aminogruppe besteht. Vorzugsweise enthält der thioheteroaliphatische Rest keine aromatische Gruppe. Die heteroaliphatischen Goldthiolate können zyklisch oder azyklisch sein. Gemäß einer bevorzugten Ausführungsform sind die heteroaliphatischen Goldthiolate aus der Gruppe ausgewählt, die aus Goldheteroalkylthiolaten besteht. Bei den Goldheteroalkythiolaten kann es sich zum Beispiel um Goldcycloheteroalkylthiolate handeln. Gemäß einer weiteren bevorzugten Ausführungsform sind die heteroaliphatischen Goldthiolate aus der Gruppe ausgewählt, die aus primären, sekundären oder tertiären heteroaliphatischen Goldthiolaten besteht. Unter sekundärem heteroaliphatischen Goldthiolat ist ein heteroaliphatisches Goldthiolat zu verstehen, das in α-Stellung zur Thiolgruppe des Thiolatrestes ein sekundäres Kohlenstoffatom aufweist. Unter tertiärem aliphatischen Goldthiolat ist ein heteroaliphatisches Goldthiolat zu verstehen, das in α-Stellung zur Thiolgruppe des Thiolatrestes ein tertiäres Kohlenstoffatom aufweist. Gemäß einer bevorzugten Ausführungsform ist das heteroaliphatische Goldthiolat aus der Gruppe ausgewählt, die aus Gold(I)-glutathion und Gold(I)-cystein besteht.

Unter aromatischen Goldthiolaten sind alle Goldthiolate zu verstehen, die Gold und einen thioaromatischen Rest aufweisen. Der thioaromatische Rest umfasst neben einer Thiogruppe wenigstens eine aromatische Gruppe. Neben der Thiogruppe und der aromatischen Gruppe kann der thioaromatische Rest wenigstens eine weitere Gruppe enthalten. Bei dieser wenigstens einen weiteren Gruppe kann es sich zum Beispiel um eine aliphatische oder heteroaliphatische Gruppe handeln. Gemäß einer bevorzugten Ausführungsform sind die aromatischen Goldthiolate aus der Gruppe ausgewählt, die aus Goldarylthiolaten und Goldaralkylthiolaten besteht.

Das Goldthiolat weist vorzugsweise wenigstens 5 Kohlenstoffatome, mehr bevorzugt wenigstens 6 Kohlenstoffatome, noch mehr bevorzugt wenigstens 8 Kohlenstoffatome, besonders bevorzugt wenigstens 10 Kohlenstoffatome und insbesondere wenigstens 12 Kohlenstoffatome auf. Vorzugsweise weist das Goldthiolat nicht mehr als 50 Kohlenstoffatome, mehr bevorzugt nicht mehr als 20 Kohlenstoffatome und noch mehr bevorzugt nicht mehr als 15 Kohlenstoffatome auf. Das Goldthiolat weist vorzugsweise 6 - 50 Kohlenstoffatome, mehr bevorzugt 8 - 20 Kohlenstoffatome, noch mehr bevorzugt 10 - 15 Kohlenstoffatome und besonders bevorzugt 12 - 15 Kohlenstoffatome auf.

Gemäß einer bevorzugten Ausführungsform umfasst das Goldthiolat in α-Stellung zur Thiolgruppe des Thiolatrestes ein tertiäres Kohlenstoffatom, das mit drei aliphatischen oder heteroaliphatischen Resten verbunden ist. Gemäß einer besonders bevorzugten Ausführungsform umfasst das Goldthiolat in α-Stellung zur Thiolgruppe des Thiolatrestes ein tertiäres Kohlenstoffatom, das mit drei aliphatischen oder heteroaliphatischen Resten verbunden ist, wobei einer der aliphatischen oder heteroaliphatischen Reste wenigstens 4 Kohlenstoffatome, mehr bevorzugt wenigstens 6 Kohlenstoffatome und noch mehr bevorzugt wenigstens 8 Kohlenstoffatome aufweist, und zwei der aliphatischen oder heteroaliphatischen Reste nicht mehr als 5 Kohlenstoffatome, mehr bevorzugt nicht mehr als 3 Kohlenstoffatome und noch mehr bevorzugt nicht mehr als 1 Kohlenstoffatom aufweisen.

Gemäß einer weiteren bevorzugten Ausführungsform ist das Goldthiolat durch die Formel Au(I)-R¹ dargestellt, wobei R¹ für den Rest -S-C(CH₃)₂-C₉H₁₉ steht. Diese Verbindung wird auch als Gold(I)-tert-dodecylthiolat oder Gold(I)-tert-dodecylmercaptid bezeichnet.

Die Mischung enthält ferner eine Rhodium(III)-Verbindung. Diese wird auch als Rhodium-Verbindung (ii) bezeichnet.

Gemäß einer bevorzugten Ausführungsform ist die Rhodium(III)-Verbindung durch die Formel Rh(III)-R²R³R⁴ dargestellt, wobei R², R³ und R⁴ unabhängig voneinander für aliphatische oder heteroaliphatische Reste stehen. Vorzugsweise weist jeder der aliphatischen oder heteroaliphatischen Reste 2 - 20 Kohlenstoffatome und mehr bevorzugt 2 - 18 Kohlenstoffatome auf. Gemäß einer besonders bevorzugten Ausführungsform handelt es sich bei den Resten R², R³ und R⁴ um gleiche Reste. Vorzugsweise ist wenigstens einer der Reste R², R³ und R⁴ ein Carboxylatrest. Gemäß einer bevorzugten Ausführungsform weist die Rhodium(III)-Verbindung wenigstens 4 Kohlenstoffatome, mehr bevorzugt wenigstens 5 Kohlenstoffatome und noch mehr bevorzugt wenigstens 7 Kohlenstoffatome auf. Gemäß einer weiteren bevorzugten Ausführungsform weist die Rhodium(III)-Verbindung nicht mehr als 60 Kohlenstoffatome, mehr bevorzugt nicht mehr als 56 Kohlenstoffatome und noch mehr bevorzugt nicht mehr als 52 Kohlenstoffatome auf. Gemäß noch einer weiteren bevorzugten Ausführungsform weist die Rhodium(III)-Verbindung 4 - 60 Kohlenstoffatome, mehr bevorzugt 5 - 56 Kohlenstoffatome und noch mehr bevorzugt 7 - 52 Kohlenstoffatome auf.

Gemäß noch einer weiteren bevorzugten Ausführungsform ist die Rhodium(III)-Verbindung aus der Gruppe ausgewählt, die aus Rhodium(III)-triacetat und Rhodium(III)-triisononylcarboxylat besteht.

Die Mischung enthält zudem ein Lösungsmittel, das 4-10 Kohlenstoffatome und wenigstens eine OH-Gruppe aufweist. Dieses Lösungsmittel wird als Lösungsmittel (iii) bezeichnet.

Die OH-Gruppe des Lösungsmittels, das wenigstens eine OH-Gruppe aufweist, kann Teil einer funktionellen Gruppe, zum Beispiel einer Carbonsäuregruppe sein. Vorzugsweise handelt es sich bei der OH-Gruppe jedoch um eine Hydroxylgruppe, die nicht Teil einer funktionellen Gruppe ist.

Vorzugsweise ist das Lösungsmittel, das wenigstens eine OH-Gruppe aufweist, ein hydroxyaliphatisches Lösungsmittel. Unter hydroxyaliphatischem Lösungsmittel ist ein aliphatisches Lösungsmittel zu verstehen, das wenigstens eine OH-Gruppe enthält.

Das Lösungsmittel, das wenigstens eine OH-Gruppe aufweist, kann ein zyklisches oder ein azyklisches Lösungsmittel sein. Gemäß einer bevorzugten Ausführungsform ist das Lösungsmittel, das wenigstens eine OH-Gruppe aufweist, ein azyklisches Lösungsmittel.

Das Lösungsmittel weist wenigstens eine OH-Gruppe auf und wenigstens 4 Kohlenstoffatome, bevorzugt wenigstens 5 Kohlenstoffatome, mehr bevorzugt wenigstens 6 Kohlenstoffatome und besonders bevorzugt wenigstens 7 Kohlenstoffatome auf.

Vorzugsweise handelt es sich bei dem Lösungsmittel, das wenigstens eine OH-Gruppe aufweist, um einen Alkohol. Gemäß einer bevorzugten Ausführungsform ist der Alkohol ein Monoalkohol.

Gemäß einer weiteren bevorzugten Ausführungsform ist das Lösungsmittel, das wenigstens eine OH-Gruppe aufweist, eine unverzweigte Verbindung.

Gemäß noch einer weiteren bevorzugten Ausführungsform liegt die molare Masse des Lösungsmittels, das wenigstens eine OH-Gruppe aufweist, im Bereich von 50 - 200 g x mol⁻¹, mehr bevorzugt im Bereich von 60 - 150 g x mol⁻¹ und noch mehr bevorzugt im Bereich von 70 - 120 g x mol⁻¹.

Vorzugsweise ist das Lösungsmittel, das wenigstens eine OH-Gruppe aufweist, aus der Gruppe ausgewählt ist, die aus 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 2-Octanol, 3-Octanol und 4-Octanol besteht. Gemäß einer besonders bevorzugten Ausführungsform ist das Lösungsmittel, das wenigstens eine OH-Gruppe aufweist, 1-Heptanol.

Gemäß einer alternativen bevorzugten Ausführungsform enthält die Mischung (iv) ein Silberthiolat. Durch den Einsatz eines Silberthiolats in der Mischung kann erreicht werden, dass die zu erzeugende Schicht keinen Goldton, sondern einen Gelbton erhält.

Unter Silberthiolat ist jede Silberverbindung zu verstehen, die Silber und einen Thiolatrest enthält. Ein Thiolatrest ist dabei ein Rest, der einen an Schwefel gebundenen organischen Rest enthält. Silber kann im Silberthiolat in jeder möglichen Oxidationsstufe enthalten sein. Vorzugsweise handelt es sich bei dem Silberthiolat um ein Silber (I)-thiolat.

Das Silberthiolat ist vorzugsweise aus der Gruppe ausgewählt, die aus aliphatischen Silberthiolaten, heteroaliphatischen Silberthiolaten und aromatischen Silberthiolaten besteht.

Unter aliphatischen Silberthiolaten sind alle Silberthiolate zu verstehen, die Silber und einen thioaliphatischen Rest aufweisen. Der thioaliphatische Rest umfasst neben einer Thiogruppe wenigstens eine aliphatische Gruppe. Vorzugsweise enthält der thioaliphatische Rest keine aromatische Gruppe. Die aliphatischen Silberthiolate können zyklisch oder azyklisch sein. Gemäß einer bevorzugten Ausführungsform ist das aliphatische Silberthiolat aus der Gruppe ausgewählt, die aus Silberalkylthiolaten besteht. Bei den Silberalkythiolaten kann es sich zum Beispiel um Silbercycloalkylthiolate handeln. Gemäß einer Ausführungsform handelt es sich bei den aliphatischen Silberthiolaten um zyklische Terpenthiolate. Gemäß einer weiteren bevorzugten Ausführungsform ist das aliphatische Silberthiolat aus der Gruppe ausgewählt, die aus primären, sekundären oder tertiären aliphatischen Silberthiolaten besteht. Unter sekundärem aliphatischen Silberthiolat ist ein aliphatisches Silberthiolat zu verstehen, das in α-Stellung zur Thiolgruppe des Thiolatrestes ein sekundäres Kohlenstoffatom aufweist. Unter tertiärem aliphatischen Silberthiolat ist ein aliphatisches Silberthiolat zu verstehen, das in α-Stellung zur Thiolgruppe des Thiolatrestes ein tertiäres Kohlenstoffatom aufweist. Das aliphatische Silberthiolat ist vorzugsweise aus der Gruppe ausgewählt, die aus Silber(I)-tert-butylthiolat, Silber(I)-tert-amylthiolat, Silber(I)-tert-octylthiolat, Silber(I)-tert-nonylthiolat, Silber(I)-tert-dodecylthiolat, Silber(I)-tetradecylthiolat, Silber(I)-tert-hexadecylthiolat und Silber(I)-pinanylthiolat besteht.

Unter heteroaliphatischen Silberthiolaten sind alle Silberthiolate zu verstehen, die Silber und einen thioheteroaliphatischen Rest aufweisen. Der thioheteroaliphatische Rest umfasst neben einer Thiogruppe und einer aliphatischen Gruppe eine weitere funktionelle Gruppe, die wenigstens ein Heteroatom enthält. Bei diesem Heteroatom handelt es sich vorzugsweise um ein Sauerstoffatom oder ein Stickstoffatom. Diese funktionelle Gruppe kann zum Beispiel aus der Gruppe ausgewählt sein, die aus einer Carboxylgruppe, einer Carbonsäureestergruppe, einer Ketogruppe, einer Hydroxygruppe, einer Aldehydgruppe, einer Amidgruppe und einer Aminogruppe besteht. Vorzugsweise enthält der thioheteroaliphatische Rest keine aromatische Gruppe. Die heteroaliphatischen Silberthiolate können zyklisch oder azyklisch sein. Gemäß einer bevorzugten Ausführungsform sind die heteroaliphatischen Silberthiolate aus der Gruppe ausgewählt, die aus Silberheteroalkylthiolaten besteht. Bei den Silberheteroalkythiolaten kann es sich zum Beispiel um Silbercycloheteroalkylthiolate handeln. Gemäß einer weiteren bevorzugten Ausführungsform sind die heteroaliphatischen Silberthiolate aus der Gruppe ausgewählt, die aus primären, sekundären oder tertiären heteroaliphatischen Silberthiolaten besteht. Unter sekundärem heteroaliphatischen Silberthiolat ist ein heteroaliphatisches Silberthiolat zu verstehen, das in α-Stellung zur Thiolgruppe des Thiolatrestes ein sekundäres Kohlenstoffatom aufweist. Unter tertiärem aliphatischen Silberthiolat ist ein heteroaliphatisches Silberthiolat zu verstehen, das in α-Stellung zur Thiolgruppe des Thiolatrestes ein tertiäres Kohlenstoffatom aufweist. Gemäß einer bevorzugten Ausführungsform ist das heteroaliphatische Silberthiolat aus der Gruppe ausgewählt, die aus Silber(I)-glutathion und Silber(I)-cystein besteht.

Unter aromatischen Silberthiolaten sind alle Silberthiolate zu verstehen, die Silber und einen thioaromatischen Rest aufweisen. Der thioaromatische Rest umfasst neben einer Thiogruppe wenigstens eine aromatische Gruppe. Neben der Thiogruppe und der aromatischen Gruppe kann der thioaromatische Rest wenigstens eine weitere Gruppe enthalten. Bei dieser wenigstens einen weiteren Gruppe kann es sich zum Beispiel um eine aliphatische oder heteroaliphatische Gruppe handeln. Gemäß einer bevorzugten Ausführungsform sind die aromatischen Silberthiolate aus der Gruppe ausgewählt, die aus Silberarylthiolaten und Silberaralkylthiolaten besteht.

Das Silberthiolat weist vorzugsweise wenigstens 5 Kohlenstoffatome, mehr bevorzugt wenigstens 6 Kohlenstoffatome, noch mehr bevorzugt wenigstens 8 Kohlenstoffatome, besonders bevorzugt wenigstens 10 Kohlenstoffatome und insbesondere wenigstens 12 Kohlenstoffatome auf. Vorzugsweise weist das Silberthiolat nicht mehr als 50 Kohlenstoffatome, mehr bevorzugt nicht mehr als 20 Kohlenstoffatome und noch mehr bevorzugt nicht mehr als 15 Kohlenstoffatome auf. Das Silberthiolat weist vorzugsweise 6 - 50 Kohlenstoffatome, mehr bevorzugt 8 - 20 Kohlenstoffatome, noch mehr bevorzugt 10 - 15 Kohlenstoffatome und besonders bevorzugt 12 - 15 Kohlenstoffatome auf.

Gemäß einer bevorzugten Ausführungsform umfasst das Silberthiolat in α-Stellung zur Thiolgruppe des Thiolatrestes ein tertiäres Kohlenstoffatom, das mit drei aliphatischen oder heteroaliphatischen Resten verbunden ist. Gemäß einer besonders bevorzugten Ausführungsform umfasst das Silberthiolat in α-Stellung zur Thiolgruppe des Thiolatrestes ein tertiäres Kohlenstoffatom, das mit drei aliphatischen oder heteroaliphatischen Resten verbunden ist, wobei einer der aliphatischen oder heteroaliphatischen Reste wenigstens 4 Kohlenstoffatome, mehr bevorzugt wenigstens 6 Kohlenstoffatome und noch mehr bevorzugt wenigstens 8 Kohlenstoffatome aufweist, und zwei der aliphatischen oder heteroaliphatischen Reste nicht mehr als 5 Kohlenstoffatome, mehr bevorzugt nicht mehr als 3 Kohlenstoffatome und noch mehr bevorzugt nicht mehr als 1 Kohlenstoffatom aufweisen.

Gemäß einer weiteren bevorzugten Ausführungsform ist das Silberthiolat durch die Formel Ag(I)-R⁵ dargestellt, wobei R⁵ für den Rest -S-C(CH₃)₂-C₉H₁₉ steht. Diese Verbindung wird auch als Silber(I)-tert-dodecylthiolat oder Silber (I)-tert-dodecylmercaptid bezeichnet.

Gemäß einer weiteren alternativen Ausführungsform enthält die Mischung (v) eine Palladium- oder Platinverbindung, die aus der Gruppe ausgewählt ist, die aus Palladiumthiolaten, Palladiumcarboxylaten, Platinthiolaten und Platincarboxylaten besteht. Durch den Einsatz der Palladium- oder Platinverbindung (v) in der Mischung kann erreicht werden, dass die zu erzeugende Schicht keinen Goldton, sondern einen Weißgoldton erhält.

Unter Palladium- oder Platinthiolat ist jede Palladium- bzw Platinverbindung zu verstehen, die Palladium bzw Platin und einen Thiolatrest enthält. Ein Thiolatrest ist dabei ein Rest, der einen an Schwefel gebundenen organischen Rest enthält. Palladium bzw Platin können im Palladiumthiolat bzw Platinthiolat in jeder möglichen Oxidationsstufe enthalten sein. Vorzugsweise handelt es sich bei dem Palladiumthiolat bzw Platinthiolat um ein Palladium(I)-thiolat oder um ein Palladium(II)-thiolat bzw um ein Platin(I)-thiolat oder ein Platin(II)-thiolat.

Das Palladiumthiolat ist vorzugsweise aus der Gruppe ausgewählt, die aus aliphatischen Palladiumthiolaten, heteroaliphatischen Palladiumthiolaten und aromatischen Palladiumthiolaten besteht. Das Platinthiolat ist vorzugsweise aus der Gruppe ausgewählt, die aus aliphatischen Platinthiolaten, heteroaliphatischen Platinthiolaten und aromatischen Platinthiolaten besteht.

Unter aliphatischen Palladiumthiolaten bzw Platinthiolaten sind alle Palladiumthiolate bzw Platinthiolate zu verstehen, die Palladium bzw Platin und einen thioaliphatischen Rest aufweisen. Der thioaliphatische Rest umfasst neben einer Thiogruppe wenigstens eine aliphatische Gruppe. Vorzugsweise enthält der thioaliphatische Rest keine aromatische Gruppe. Die aliphatischen Palladiumthiolate bzw Platinthiolate können zyklisch oder azyklisch sein. Gemäß einer bevorzugten Ausführungsform ist das aliphatische Palladiumthiolat aus der Gruppe ausgewählt, die aus Palladiumalkylthiolaten besteht. Gemäß einer weiteren bevorzugten Ausführungsform ist das aliphatische Platinthiolat aus der Gruppe ausgewählt, die aus Platinalkylthiolaten besteht. Bei den Palladiumalkythiolaten kann es sich zum Beispiel um Palladiumcycloalkylthiolate handeln. Bei den Platinalkythiolaten kann es sich zum Beispiel um Platincycloalkylthiolate handeln. Gemäß einer Ausführungsform handelt es sich bei den aliphatischen Palladiumthiolaten bzw Platinthiolaten um zyklische Terpenthiolate. Gemäß einer weiteren bevorzugten Ausführungsform ist das aliphatische Palladiumthiolat aus der Gruppe ausgewählt, die aus primären, sekundären oder tertiären aliphatischen Palladiumthiolaten besteht. Gemäß einer weiteren bevorzugten Ausführungsform ist das aliphatische Platinthiolat aus der Gruppe ausgewählt, die aus primären, sekundären oder tertiären aliphatischen Platinthiolaten besteht. Unter sekundärem aliphatischen Palladiumthiolat bzw Platinthiolat ist ein aliphatisches Palladiumthiolat bzw Platinthiolat zu verstehen, das in α-Stellung zur Thiolgruppe des Thiolatrestes ein sekundäres Kohlenstoffatom aufweist. Unter tertiärem aliphatischen Palladiumthiolat bzw Platinthiolat ist ein aliphatisches Palladiumthiolat bzw Platinthiolat zu verstehen, das in α-Stellung zur Thiolgruppe des Thiolatrestes ein tertiäres Kohlenstoffatom aufweist. Das aliphatische Palladiumthiolat ist vorzugsweise aus der Gruppe ausgewählt, die aus Palladium(II)-di-tert-butylthiolat, Palladium(II)-di-tert-amylthiolat, Palladium(II)-di-tert-octylthiolat, Palladium(II)-di-tert-nonylthiolat, Palladium(II)-di-tert-dodecylthiolat, Palladium(II)-bis-tetradecylthiolat, Palladium(II)-di-tert-hexadecylthiolat und Palladium(II)-di-pinanylthiolat besteht. Das aliphatische Platinthiolat ist vorzugsweise aus der Gruppe ausgewählt, die aus Platin(II)-di-tert-butylthiolat, Platin(II)-di-tert-amylthiolat, Platin(II)-di-tert-octylthiolat, Platin(II)-di-tert-nonylthiolat, Platin(II)-di-tert-dodecylthiolat, Platin(II)-bis-tetradecylthiolat, Platin(II)-di-tert-hexadecylthiolat und Platin(II)-di-pinanylthiolat besteht.

Unter heteroaliphatischen Palladiumthiolaten bzw Platinthiolaten sind alle Palladiumthiolate bzw Platinthiolate zu verstehen, die Palladium bzw Platin und einen thioheteroaliphatischen Rest aufweisen. Der thioheteroaliphatische Rest umfasst neben einer Thiogruppe und einer aliphatischen Gruppe eine weitere funktionelle Gruppe, die wenigstens ein Heteroatom enthält. Bei diesem Heteroatom handelt es sich vorzugsweise um ein Sauerstoffatom oder ein Stickstoffatom. Diese funktionelle Gruppe kann zum Beispiel aus der Gruppe ausgewählt sein, die aus einer Carboxylgruppe, einer Carbonsäureestergruppe, einer Ketogruppe, einer Hydroxygruppe, einer Aldehydgruppe, einer Amidgruppe und einer Aminogruppe besteht. Vorzugsweise enthält der thioheteroaliphatische Rest keine aromatische Gruppe. Die heteroaliphatischen Palladiumthiolate bzw Platinthiolate können zyklisch oder azyklisch sein. Gemäß einer bevorzugten Ausführungsform sind die heteroaliphatischen Palladiumthiolate aus der Gruppe ausgewählt, die aus Palladiumheteroalkylthiolaten besteht. Gemäß einer weiteren bevorzugten Ausführungsform sind die heteroaliphatischen Platinthiolate aus der Gruppe ausgewählt, die aus Platinheteroalkylthiolaten besteht. Bei den Palladiumheteroalkythiolaten bzw Platinheteroalkylthiolaten kann es sich zum Beispiel um Palladiumcycloheteroalkylthiolate bzw Platincycloheteroalkylthiolate handeln. Gemäß einer weiteren bevorzugten Ausführungsform sind die heteroaliphatischen Palladiumthiolate aus der Gruppe ausgewählt, die aus primären, sekundären oder tertiären heteroaliphatischen Palladiumthiolaten besteht. Gemäß einer weiteren bevorzugten Ausführungsform sind die heteroaliphatischen Platinthiolate aus der Gruppe ausgewählt, die aus primären, sekundären oder tertiären heteroaliphatischen Platinthiolaten besteht. Unter sekundärem heteroaliphatischen Palladiumthiolat bzw Platinthiolat ist ein heteroaliphatisches Palladiumthiolat bzw Platinthiolat zu verstehen, das in α-Stellung zur Thiolgruppe des Thiolatrestes ein sekundäres Kohlenstoffatom aufweist. Unter tertiärem aliphatischen Palladiumthiolat bzw Platinthiolat ist ein heteroaliphatisches Palladiumthiolat bzw Platinthiolat zu verstehen, das in α-Stellung zur Thiolgruppe des Thiolatrestes ein tertiäres Kohlenstoffatom aufweist. Gemäß einer bevorzugten Ausführungsform ist das heteroaliphatische Palladiumthiolat aus der Gruppe ausgewählt, die aus Palladium(II)-di-glutathion und Palladium(II)-di-cystein besteht. Gemäß einer bevorzugten Ausführungsform ist das heteroaliphatische Platinthiolat aus der Gruppe ausgewählt, die aus Platin(II)-di-glutathion und Platin(II)-di-cystein besteht.

Unter aromatischen Palladiumthiolaten bzw Platinthiolaten sind alle Palladiumthiolate bzw Platinthiolate zu verstehen, die Palladium bzw Platin und einen thioaromatischen Rest aufweisen. Der thioaromatische Rest umfasst neben einer Thiogruppe wenigstens eine aromatische Gruppe. Neben der Thiogruppe und der aromatischen Gruppe kann der thioaromatische Rest wenigstens eine weitere Gruppe enthalten. Bei dieser wenigstens einen weiteren Gruppe kann es sich zum Beispiel um eine aliphatische oder heteroaliphatische Gruppe handeln. Gemäß einer bevorzugten Ausführungsform sind die aromatischen Palladiumthiolate aus der Gruppe ausgewählt, die aus Palladiumarylthiolaten und Palladiumaralkylthiolaten besteht. Gemäß einer weiteren bevorzugten Ausführungsform sind die aromatischen Platinthiolate aus der Gruppe ausgewählt, die aus Platinarylthiolaten und Platinalkylthiolaten besteht.

Das Palladiumthiolat bzw Platinthiolat weist vorzugsweise wenigstens 5 Kohlenstoffatome, mehr bevorzugt wenigstens 6 Kohlenstoffatome, noch mehr bevorzugt wenigstens 8 Kohlenstoffatome, besonders bevorzugt wenigstens 10 Kohlenstoffatome und insbesondere wenigstens 12 Kohlenstoffatome auf. Vorzugsweise weist das Palladiumthiolat bzw Platinthiolat nicht mehr als 50 Kohlenstoffatome, mehr bevorzugt nicht mehr als 20 Kohlenstoffatome und noch mehr bevorzugt nicht mehr als 15 Kohlenstoffatome auf.

Gemäß einer bevorzugten Ausführungsform umfasst das Palladiumthiolat bzw Platinthiolat in α-Stellung zur Thiolgruppe des Thiolatrestes ein tertiäres Kohlenstoffatom, das mit drei aliphatischen oder heteroaliphatischen Resten verbunden ist. Gemäß einer besonders bevorzugten Ausführungsform umfasst das Palladiumthiolat bzw Platinthiolat in α-Stellung zur Thiolgruppe des Thiolatrestes ein tertiäres Kohlenstoffatom, das mit drei aliphatischen oder heteroaliphatischen Resten verbunden ist, wobei einer der aliphatischen oder heteroaliphatischen Reste wenigstens 4 Kohlenstoffatome, mehr bevorzugt wenigstens 6 Kohlenstoffatome und noch mehr bevorzugt wenigstens 8 Kohlenstoffatome aufweist, und zwei der aliphatischen oder heteroaliphatischen Reste nicht mehr als 5 Kohlenstoffatome, mehr bevorzugt nicht mehr als 3 Kohlenstoffatome und noch mehr bevorzugt nicht mehr als 1 Kohlenstoffatom aufweisen.

Gemäß einer weiteren bevorzugten Ausführungsform ist das Palladiumthiolat durch die Formel Pd(II)-R⁶R⁷ dargestellt, wobei R⁶ und R⁷ jeweils für den Rest -S-C(CH₃)₂-C₉H₁₉ stehen. Diese Verbindung wird auch als Palladium(II)-di-tert-dodecylthiolat oder Palladium(II)-di-tert-dodecylmercaptid bezeichnet. Gemäß einer weiteren bevorzugten Ausführungsform ist das Platinthiolat durch die Formel Pt(II)-R⁸R⁹ dargestellt, wobei R⁸ und R⁹ jeweils für den Rest -S-C(CH₃)₂-C₉H₁₉ stehen. Diese Verbindung wird auch als Platin(II)-di-tert-dodecylthiolat oder Platin(II)-di-tert-dodecylmercaptid bezeichnet.

Das Palladiumcarboxylat ist vorzugsweise eine Verbindung, die neben Palladium wenigstens einen Carboxylatrest enthält. Vorzugsweise handelt es sich bei dem Palladiumcarboxylat um ein Palladium(II)-di(carboxylat). Der wenigstens eine Carboxylatrest enthält vorzugsweise 2 - 50 Kohlenstoffatome, noch mehr bevorzugt 4 - 50 Kohlenstoffatome und besonders bevorzugt 4 - 20 Kohlenstoffatome. Gemäß einer bevorzugten Ausführungsform handelt es sich bei dem Palladiumcarboxylat um Palladium(II)-isooctyl-mercaptopropionat, Palladium(II)-di-acetat oder Palladium(II)-di-ethylhexanoat.

Das Platincarboxylat ist vorzugsweise eine Verbindung, die neben Platin wenigstens einen Carboxylatrest enthält. Vorzugsweise handelt es sich bei dem Platincarboxylat um ein Platin(II)-di(carboxylat). Der wenigstens eine Carboxylatrest enthält vorzugsweise 2 - 50 Kohlenstoffatome, noch mehr bevorzugt 4 - 50 Kohlenstoffatome und besonders bevorzugt 4 - 20 Kohlenstoffatome. Gemäß einer bevorzugten Ausführungsform handelt es sich bei dem Platincarboxylat um Platin(II)-di-dodecanat, Platin(II)-di-acetat oder Platin(II)-diethylhexanoat.

Die Mischung kann ferner weitere fachübliche Bestandteile aufweisen.

Vorzugsweise enthält die Mischung einen Haftverbesserer. Geeignete Haftverbesserer sind dem Fachmann bekannt. Der Haftverbesserer ist vorzugsweise aus der Gruppe ausgewählt, die aus Metallsalzen und Siloxanen besteht. Das Metallsalz ist vorzugsweise aus der Gruppe ausgewählt, die aus Metallcarboxylaten besteht. Das Metallkation des Metallsalzes kann zum Beispiel aus der Gruppe ausgewählt sein, die aus Bismutkationen, Siliziumkationen und Zinnkationen besteht. Beispielsweise kann es sich bei dem Bismutkation um ein Bi³⁺-Ion handeln. Gemäß einer bevorzugten Ausführungsform ist der Haftverbesserer demnach aus der Gruppe ausgewählt, die aus Siloxanen, Bismutcarboxylaten, Siliziumcarboxylaten und Zinncarboxylaten besteht. Ein üblicher Haftverbesserer ist zum Beispiel Bismut-2-ethylhexanoat.

Die Mischung enthält vorzugsweise ein Benetzungsadditiv. Geeignete Benetzungsadditive sind dem Fachmann bekannt. Gemäß einer bevorzugten Ausführungsform ist das Benetzungsadditiv aus der Gruppe ausgewählt, die aus Siloxanen, Silikonen und Tensiden besteht. Bei dem Benetzungsadditiv kann es sich zum Beispiel um ein polyethermodifiziertes Polymethylsiloxan handeln.

Gemäß einer weiteren bevorzugten Ausführungsform beträgt der maximale Anteil an Halogenidverbindungen 0,5 Gewichtsprozent, mehr bevorzugt 0,3 Gewichtsprozent und noch mehr bevorzugt 0,1 Gewichtsprozent, bezogen auf das Gesamtgewicht der Mischung.

Gemäß einer weiteren bevorzugten Ausführungsform beträgt der maximale Anteil an Fettsäuren 5,0 Gewichtsprozent, mehr bevorzugt 4,0 Gewichtsprozent und noch mehr bevorzugt 3,0 Gewichtsprozent, bezogen auf das Gesamtgewicht der Mischung.

In der Mischung beträgt das Verhältnis V = (a) / (b) ≥ 2,2, wobei (a) der Anteil an Lösungsmittel (iii) und (b) der Anteil an Gold des Goldthiolats (i), jeweils bezogen auf das Gesamtgewicht der Mischung, ist. Es hat sich überraschenderweise herausgestellt, dass es bei der Applikation einer Mischung, die ein Verhältnis V = (a) / (b) ≥ 2,2 aufweist, nicht zu einer Ausfällung von elementarem Gold an den Metallteilen des zur Applikation der Mischung verwendeten Tintenstrahldruckers kommt, sondern das Goldthiolat in der Mischung gelöst bleibt und das darin enthaltene Gold sich erst beim anschließenden Brennvorgang am zu beschichtenden Substrat niederschlägt.

Gemäß einer bevorzugten Ausführungsform beträgt das Verhältnis V = (a) / (b) ≥ 2,3, mehr bevorzugt ≥ 2,4, noch mehr bevorzugt ≥ 2,5, besonders bevorzugt ≥ 2,7, ganz besonders bevorzugt ≥ 3,0 und insbesondere ≥ 3,5. Gemäß einer weiteren bevorzugten Ausführungsform beträgt das Verhältnis V = (a) / (b) ≤ 30,0, mehr bevorzugt ≤ 25,0, noch mehr bevorzugt ≤ 20,0, besonders bevorzugt ≤ 18,0, ganz besonders bevorzugt ≤ 15,0 und insbesondere ≤ 12,0. Gemäß noch einer weiteren bevorzugten Ausführungsform liegt das Verhältnis V = (a) / (b) im Bereich von 2,2 - 30,0, mehr bevorzugt im Bereich von 2,3 - 25,0, noch mehr bevorzugt im Bereich von 2,4 - 20,0, besonders bevorzugt im Bereich von 2,5 - 18,0, ganz besonders bevorzugt im Bereich von 2,7 - 15,0 und insbesondere im Bereich von 3,0 - 12,0.

Für die Berechnung des Verhältnisses V = (a) / (b) wird unter (a) der Anteil an Lösungsmittel (iii), bezogen auf das Gesamtgewicht der Mischung, berücksichtigt. Soweit in der Mischung mehr als eine Art von Lösungsmittel (iii) vorliegt, wird der Berechnung die Summe der Anteile aller Lösungsmittel (iii), bezogen auf das Gesamtgewicht der Mischung, zugrunde gelegt. Für die Berechnung des Verhältnisses V = (a) / (b) wird unter (b) der Anteil an Gold des Goldthiolats (i), bezogen auf das Gesamtgewicht der Mischung, berücksichtigt. Soweit in der Mischung mehr als eine Art von Goldthiolat (i) vorliegt, wird der Berechnung die Summe der Anteile an Gold aller Goldthiolate (i), bezogen auf das Gesamtgewicht der Mischung, zugrunde gelegt.

Die Berechnung des Verhältnisses V = (a) / (b) soll durch folgendes Berechnungsbeispiel veranschaulicht werden: Eine Mischung enthält 31,25 Gewichtsprozent eines Gold(I)thiolats, wobei der Anteil an Gold 48 Gewichtsprozent, bezogen auf das Gewicht des Gold(I)-thiolats, beträgt, 30,00 Gewichtsprozent 1-Hexanol, 15,00 Gewichtsprozent 1-Heptanol und als Rest andere Bestandteile. Demnach enthält die Mischung 15,00 Gewichtsprozent (31,25 Gewichtsprozent x 48 Prozent) an Gold des Goldthiolats (i) und 45,00 Gewichtsprozent (30,00 Gewichtsteile 1-Hexanol + 15,00 Gewichtsteile 1-Heptanol) an Lösungsmittel (iii). Das Verhältnis V = (a) / (b) beträgt daher in diesem Beispiel 3,00.

Gemäß einer bevorzugten Ausführungsform beträgt der Anteil an Gold wenigstens 5,0 Gewichtsprozent, mehr bevorzugt wenigstens 6,0 Gewichtsprozent, noch mehr bevorzugt wenigstens 7,0 Gewichtsprozent, besonders bevorzugt wenigstens 8,0 Gewichtsprozent, ganz besonders bevorzugt wenigstens 9,0 Gewichtsprozent und insbesondere wenigstens 10,0 Gewichtsprozent, bezogen auf das Gesamtgewicht der Mischung. Überraschenderweise hat sich herausgestellt, dass sich bei einem Anteil an Gold von weniger als 5,0 Gewichtsprozent, bezogen auf das Gesamtgewicht der Mischung, eine Glanzgoldschicht, gelbe Schicht oder Weißgoldschicht während des Erhitzens häufig nur dann ausbildet, wenn die Menge der auf das Substrat applizierten Mischung sehr groß ist. Gemäß einer weiteren bevorzugten Ausführungsform beträgt der Anteil an Gold nicht mehr als 30,0 Gewichtsprozent, mehr bevorzugt nicht mehr als 27,0 Gewichtsprozent, noch mehr bevorzugt nicht mehr als 25,0 Gewichtsprozent, besonders bevorzugt nicht mehr als 23,0 Gewichtsprozent, ganz besonders bevorzugt nicht mehr als 21,0 Gewichtsprozent und insbesondere nicht mehr als 20,0 Gewichtsprozent, bezogen auf das Gesamtgewicht der Mischung. Gemäß noch einer weiteren bevorzugten Ausführungsform beträgt der Anteil an Gold 5,0 - 30,0 Gewichtsprozent, mehr bevorzugt 6,0 - 27,0 Gewichtsprozent, noch mehr bevorzugt 7,0 - 25,0 Gewichtsprozent, besonders bevorzugt 8,0 - 23,0 Gewichtsprozent, ganz besonders bevorzugt 9,0 - 21,0 Gewichtsprozent und insbesondere 10,0 - 20,0 Gewichtsprozent, bezogen auf das Gesamtgewicht der Mischung.

Gemäß einer bevorzugten Ausführungsform beträgt der Anteil an Goldthiolat (i) wenigstens 10,0 Gewichtsprozent, mehr bevorzugt wenigstens 12,0 Gewichtsprozent, noch mehr bevorzugt wenigstens 14,0 Gewichtsprozent, besonders bevorzugt wenigstens 16,0 Gewichtsprozent, ganz besonders bevorzugt wenigstens 18,0 Gewichtsprozent und insbesondere wenigstens 20,0 Gewichtsprozent, bezogen auf das Gesamtgewicht der Mischung. Gemäß einer weiteren bevorzugten Ausführungsform beträgt der Anteil an Goldthiolat (i) nicht mehr als 60,0 Gewichtsprozent, mehr bevorzugt nicht mehr als 54,0 Gewichtsprozent, noch mehr bevorzugt nicht mehr als 50,0 Gewichtsprozent, besonders bevorzugt nicht mehr als 46,0 Gewichtsprozent, ganz besonders bevorzugt nicht mehr als 42,0 Gewichtsprozent und insbesondere nicht mehr als 40,0 Gewichtsprozent, bezogen auf das Gesamtgewicht der Mischung. Gemäß noch einer weiteren bevorzugten Ausführungsform beträgt der Anteil an Goldthiolat (i) 10,0 - 60,0 Gewichtsprozent, mehr bevorzugt 12,0 - 54,0 Gewichtsprozent, noch mehr bevorzugt 14,0 - 50,0 Gewichtsprozent, besonders bevorzugt 16,0 - 46,0 Gewichtsprozent, ganz besonders bevorzugt 18,0 - 42,0 Gewichtsprozent und insbesondere 20,0 - 40,0 Gewichtsprozent, bezogen auf das Gesamtgewicht der Mischung.

Gemäß einer weiteren bevorzugten Ausführungsform beträgt der Anteil an Rhodium-Verbindung (ii) wenigstens 0,01 Gewichtsprozent, mehr bevorzugt wenigstens 0,03 Gewichtsprozent, noch mehr bevorzugt wenigstens 0,05 Gewichtsprozent und besonders bevorzugt wenigstens 0,07 Gewichtsprozent, bezogen auf das Gesamtgewicht der Mischung. Gemäß einer weiteren bevorzugten Ausführungsform beträgt der Anteil an Rhodium-Verbindung (ii) nicht mehr als 3,00 Gewichtsprozent, mehr bevorzugt nicht mehr als 2,00 Gewichtsprozent, noch mehr bevorzugt nicht mehr als 1,00 Gewichtsprozent und besonders bevorzugt nicht mehr als 0,50 Gewichtsprozent, bezogen auf das Gesamtgewicht der Mischung. Gemäß noch einer weiteren bevorzugten Ausführungsform beträgt der Anteil an Rhodium-Verbindung (ii) 0,01 - 3,00 Gewichtsprozent, mehr bevorzugt 0,03 - 2,00 Gewichtsprozent, noch mehr bevorzugt 0,05 - 1,00 Gewichtsprozent und besonders bevorzugt 0,10 - 0,50 Gewichtsprozent, bezogen auf das Gesamtgewicht der Mischung.

Gemäß einer weiteren bevorzugten Ausführungsform beträgt der Anteil an Lösungsmittel (iii) wenigstens 40,0 Gewichtsprozent, mehr bevorzugt wenigstens 45,0 Gewichtsprozent, noch mehr bevorzugt wenigstens 50,0 Gewichtsprozent, besonders bevorzugt wenigstens 55,0 Gewichtsprozent und ganz besonders bevorzugt wenigstens 60,0 Gewichtsprozent, bezogen auf das Gesamtgewicht der Mischung. Gemäß einer weiteren bevorzugten Ausführungsform beträgt der Anteil an Lösungsmittel (iii) nicht mehr als 90,0 Gewichtsprozent, mehr bevorzugt nicht mehr als 85,0 Gewichtsprozent, noch mehr bevorzugt nicht mehr als 80,0 Gewichtsprozent, besonders bevorzugt nicht mehr als 75,0 Gewichtsprozent und ganz besonders bevorzugt nicht mehr als 70,0 Gewichtsprozent, bezogen auf das Gesamtgewicht der Mischung. Gemäß einer weiteren bevorzugten Ausführungsform beträgt der Anteil an Lösungsmittel (iii) 40,0 - 90,0 Gewichtsprozent, mehr bevorzugt 45,0 - 85,0 Gewichtsprozent, noch mehr bevorzugt 50,0 - 80,0 Gewichtsprozent, besonders bevorzugt 55,0 - 75,0 Gewichtsprozent und ganz besonders bevorzugt 60,0 - 70,0 Gewichtsprozent, bezogen auf das Gesamtgewicht der Mischung.

Gemäß einer weiteren Ausführungsform beträgt der Anteil an Silberthiolat (iv) - sofern enthalten - wenigstens 0,1 Gewichtsprozent, mehr bevorzugt wenigstens 0,2 Gewichtsprozent, noch mehr bevorzugt wenigstens 0,3 Gewichtsprozent, besonders bevorzugt wenigstens 0,5 Gewichtsprozent und ganz besonders bevorzugt wenigstens 0,7 Gewichtsprozent, bezogen auf das Gesamtgewicht der Mischung. Gemäß einer weiteren bevorzugten Ausführungsform beträgt der Anteil an Silberthiolat (iv) nicht mehr als 20,0 Gewichtsprozent, mehr bevorzugt nicht mehr als 10,0 Gewichtsprozent, noch mehr bevorzugt nicht mehr als 7,0 Gewichtsprozent, besonders bevorzugt nicht mehr als 5,0 Gewichtsprozent und ganz besonders bevorzugt nicht mehr als 2,0 Gewichtsprozent, bezogen auf das Gesamtgewicht der Mischung. Gemäß einer weiteren bevorzugten Ausführungsform beträgt der Anteil an Silberthiolat (iv) 0,1 - 20,0 Gewichtsprozent, mehr bevorzugt 0,2 - 10,0 Gewichtsprozent, noch mehr bevorzugt 0,3 - 7,0 Gewichtsprozent, besonders bevorzugt 0,5 - 5,0 Gewichtsprozent und ganz besonders bevorzugt 0,7 - 2,0 Gewichtsprozent, bezogen auf das Gesamtgewicht der Mischung.

Gemäß einer weiteren Ausführungsform beträgt der Anteil an Palladiumverbindung bzw Platinverbindung (v) - sofern enthalten - wenigstens 0,1 Gewichtsprozent, mehr bevorzugt wenigstens 0,2 Gewichtsprozent, noch mehr bevorzugt wenigstens 0,3 Gewichtsprozent, besonders bevorzugt wenigstens 0,5 Gewichtsprozent und ganz besonders bevorzugt wenigstens 0,7 Gewichtsprozent, bezogen auf das Gesamtgewicht der Mischung. Gemäß einer weiteren bevorzugten Ausführungsform beträgt der Anteil an Palladiumverbindung bzw Platinverbindung (v) nicht mehr als 30,0 Gewichtsprozent, mehr bevorzugt nicht mehr als 2,0 Gewichtsprozent, noch mehr bevorzugt nicht mehr als 10,0 Gewichtsprozent, besonders bevorzugt nicht mehr als 5,0 Gewichtsprozent und ganz besonders bevorzugt nicht mehr als 2,0 Gewichtsprozent, bezogen auf das Gesamtgewicht der Mischung. Gemäß einer weiteren bevorzugten Ausführungsform beträgt der Anteil an Palladiumverbindung bzw Platinverbindung (v) 0,1 - 30,0 Gewichtsprozent, mehr bevorzugt 0,2 - 2,0 Gewichtsprozent, noch mehr bevorzugt 0,3 - 10,0 Gewichtsprozent, besonders bevorzugt 0,5 - 5,0 Gewichtsprozent und ganz besonders bevorzugt 0,7 - 2,0 Gewichtsprozent, bezogen auf das Gesamtgewicht der Mischung.

Gemäß noch einer weiteren Ausführungsform beträgt der Anteil an Lösungsmitteln, die sich von Lösungsmittel (iii) unterscheiden, insbesondere an Bestandteilen, die bei einer Temperatur von 25°C und einem Druck von 1,013 bar flüssig sind und sich von Lösungsmittel (iii) unterscheiden, nicht mehr als 20,0 Gewichtsprozent, bevorzugt nicht mehr als 15,0 Gewichtsprozent, noch mehr bevorzugt nicht mehr als 10,0 Gewichtsprozent, besonders bevorzugt nicht mehr als 5,0 Gewichtsprozent und ganz besonders bevorzugt nicht mehr als 3,0 Gewichtsprozent, bezogen auf das Gesamtgewicht der Mischung.

Gemäß einer besonders bevorzugten Ausführungsform enthält die Mischung (i) ein Goldthiolat, (ii) eine Rhodium(III)-Verbindung und (iii) ein Lösungsmittel, das wenigstens eine OH-Gruppe aufweist, vorzugsweise einen Monoalkohol, wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist, und wobei die Mischung wenigstens 5,0 Gewichtsprozent Gold und wenigstens 40,0 Gewichtsprozent Lösungsmittel (iii), jeweils bezogen auf das Gesamtgewicht der Mischung enthält.

Gemäß einer besonders bevorzugten Ausführungsform enthält die Mischung (i) ein aliphatisches Goldthiolat, (ii) eine Rhodium(III)-Verbindung und (iii) einen Monoalkohol, wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist.

Gemäß einer weiteren besonders bevorzugten Ausführungsform enthält die Mischung (i) ein Goldthiolat, das in α-Stellung zur Thiolgruppe des Thiolatrestes ein tertiäres Kohlenstoffatom enthält, das mit drei aliphatischen oder heteroaliphatischen Resten verbunden ist, (ii) eine Rhodium(III)-Verbindung und (iii) 1-Heptanol, wobei die Mischung ein Verhältnis V = (a) / (b) ≥ 2,2 aufweist, wobei (a) der Anteil an 1-Heptanol und (b) der Anteil an Gold des Goldthiolats (i), jeweils bezogen auf das Gesamtgewicht der Mischung, ist.

Gemäß einer weiteren besonders bevorzugten Ausführungsform enthält die Mischung (i) ein Goldthiolat, das in α-Stellung zur Thiolgruppe des Thiolatrestes ein tertiäres Kohlenstoffatom enthält, das mit drei aliphatischen oder heteroaliphatischen Resten verbunden ist, (ii) eine Rhodium(III)-Verbindung und (iii) 1-Heptanol, wobei die Mischung ein Verhältnis V = (a) / (b) ≥ 2,2 aufweist, wobei (a) der Anteil an 1-Heptanol und (b) der Anteil an Gold des Goldthiolats (i), jeweils bezogen auf das Gesamtgewicht der Mischung, ist, und wobei die Mischung wenigstens 5,0 Gewichtsprozent Gold, bezogen auf das Gesamtgewicht der Mischung enthält.

Gemäß einer weiteren besonders bevorzugten Ausführungsform enthält die Mischung (i) ein Goldthiolat, das in α-Stellung zur Thiolgruppe des Thiolatrestes ein tertiäres Kohlenstoffatom enthält, das mit drei aliphatischen oder heteroaliphatischen Resten verbunden ist, (ii) eine Rhodium(III)-Verbindung und (iii) 1-Heptanol, wobei die Mischung ein Verhältnis V = (a) / (b) ≥ 2,2 aufweist, wobei (a) der Anteil an 1-Heptanol und (b) der Anteil an Gold des Goldthiolats (i), jeweils bezogen auf das Gesamtgewicht der Mischung, ist, und wobei die Mischung wenigstens 5,0 Gewichtsprozent Gold und wenigstens 40,0 Gewichtsprozent 1-Heptanol, jeweils bezogen auf das Gesamtgewicht der Mischung enthält.

Ein weiterer Gegenstand der vorliegenden Erfindung betrifft ein Verfahren zur Herstellung eines Schichtaufbaus (2) beinhaltend die Schritte:
(a) Bereitstellung einer Mischung (6) enthaltend
   (i) ein Goldthiolat,
   (ii) eine Rhodium(III)-Verbindung und
   (iii) ein Lösungsmittel, das 4-10 Kohlenstoffatome und
   wenigstens eine OH-Gruppe aufweist,
   wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist,
(b) Aufbringen der Mischung durch eine Düse auf ein Substrat (4) unter Erhalt eines Vorläufers (12) und
(c) Erhitzen des Vorläufers (12) auf eine Temperatur von über 200 °C unter Erhalt des Schichtaufbaus (2).

Das Bereitstellen der Mischung in Schritt (a) kann auf jede Art erfolgen, die der Fachmann zur Bereitstellung der Mischung für ein solches Verfahren auswählen würde. Bevorzugt wird die Mischung in einem Behälter bereitgestellt, der zum Aufbringen der Mischung in Schritt (b) geeignet ist. Weiterhin bevorzugt ist der Behälter ein Behälter, der ein Ventil zum dosierten Abgeben der Mischung aufweist. Bevorzugt ist der Behälter eine Druckerpatrone.

Das Aufbringen der Mischung durch eine Düse auf das Substrat unter Erhalt des Vorläufers kann auf jede Art erfolgen, die der Fachmann zum Aufbringen der Mischung in einem solchen Verfahren auswählen würde. Dabei wird das Substrat, im Folgenden auch als Substratschicht bezeichnet, bevorzugt mindestens zu einem Teil mit der Mischung überlagert.

Bevorzugt ist das Aufbringen ein Ablegen der Mischung auf das Substrat. Das Aufbringen durch Ablegen der Mischung kann beispielsweise durch Spincoating, Gießen, Auftropfen, Spritzen, Aufsprühen, Aufrakeln oder Bedrucken, beispielsweise über eine Dosierpumpe oder ein Tintenstrahl (*Inkjet*)- oder Siebdrucken auf die Substratschicht erfolgen. Bevorzugt wird die Mischung über eine Dosierpumpe, ein Tintenstrahldrucken oder ein Siebdrucken auf die Substratoberfläche aufgebracht. Bevorzugt wird die Mischung mit einer Nassfilmdicke von 0,5 µm bis 250 µm, bevorzugt mit einer Nassfilmdicke von 2 µm bis 150 µm, aufgebracht.

Unter Ablegen wird erfindungsgemäß verstanden, dass die zum Aufbringen verwendete Mischung, bevorzugt auch Flüssigkeit oder Druckmasse genannt, mittels eines Hilfsmittels in Form der Düse auf der zu überlagernden Oberfläche aufgebracht wird. Dies kann durch unterschiedliche Hilfsmittel geschehen. So kann die zum Aufbringen oder Überlagern verwendete Druckmasse auf die Substratschicht durch eine Düse gesprüht, gespritzt oder durch eine Schlitzdüse abgelegt werden. Weitere Methoden sind das Vorhanggießen und das Spin-Coating. Zusätzlich kann die zum Aufbringen oder Überlagern verwendete Druckmasse beispielsweise über eine Rolle oder Walze auf die Oberfläche des Substrats appliziert bzw. gedruckt werden. Als Sprüh- bzw. Spritzverfahren sind beispielsweise die Mikro-Dosierung oder Digitaldruck über eine Düse bekannt. Hierbei kann auf die zum Aufbringen oder Überlagern verwendete Druckmasse Druck ausgeübt werden oder die zum Aufbringen verwendete Druckmasse wird einfach tropfend auf die Oberfläche durch die Düse appliziert. In einer bevorzugten Ausgestaltung des Verfahrens weist die Düse eine Öffnung mit einer Größe in einem Bereich von 10 bis 70 µm auf.

Als weiteres Druckverfahren kann bevorzugt ein Siebdruckverfahren angewendet werden. Beim Siebdruckverfahren wird ein Sieb, bestehend aus einem möglichst formstabilen Material, wie Holz; Metall, bevorzugt Stahl; einer Keramik oder einem Kunststoff mit einer ausgewählten Maschenweite auf das zu überlagernde oder über dem zu überlagernden Objekt, wie hier dem Substrat, angeordnet. Auf dieses Sieb wird die zum Aufbringen oder Überlagern verwendete Druckmasse aufgebracht und mit einer Rakel durch die Maschen gedrückt. Dabei kann aufgrund eines Musters in dem Sieb an unterschiedlichen Stellen unterschiedlich viel, zum Aufbringen oder Überlagern verwendete Druckmasse aufgebracht werden. So kann durch die Geometrie und Anordnung der Maschen entweder ein gleichmäßiger Film der zum Überlagern verwendeten Druckmasse aufgebracht werden oder Bereiche mit keiner oder wenig zum Aufbringen verwendeten Druckmasse mit Bereichen mit viel zum Aufbringen verwendeten Druckmasse abwechseln. Bevorzugt wird ein gleichmäßiger Film der zum Überlagern verwendeten Druckmasse auf die Oberfläche übertragen. Die Siebmaschen können auch durch entsprechend aufgebrachte Materialien (Kopierschichten, Siebdruckschablonen) teilweise geschlossen sein, so dass die Druckmasse nur in definierten Bereichen mit offenen Maschen auf das Substrat übertragen wird, um so beispielsweise eine definierte Struktur wie ein Muster zu erhalten. Weiterhin können statt Sieben auch dünne Filme mit definierten Öffnungen (Stencil) zum Überlagern der Druckmasse verwendet werden.

Je nach Ausgestaltung der Düse sowie der Viskosität und Polarität der zum Überlagern verwendeten Druckmasse, können unterschiedlich dicke Schichten auf die gewünschte Oberfläche der Substratschicht aufgebracht werden. Bevorzugt wird die beim Aufbringen oder Überlagern aufgebrachte Schicht mit einer Dicke in einem Bereich von 0,5 bis 100 µm, bevorzugt in einem Bereich von 1 bis 50 µm, besonders bevorzugt in einem Bereich von 2 bis 30 µm appliziert. Die Dicke der beim Aufbringen aufgebrachten Schicht wird im Folgenden Nassschichtdicke genannt. Die Nassschichtdicke ist abhängig von dem jeweiligen Material, das beim Überlagern aufgebracht wird und der verwendeten Aufbringtechnik. Die Nassschichtdicke wird direkt im Anschluss an den Schritt des Überlagerns gemessen.

Das Substrat kann jede Form haben, die ein Aufbringen der Mischung auf das Substrat ermöglicht. Bevorzugt weist das Substrat mindestens eine zusammenhängende Oberfläche auf. Die mindestens eine zusammenhängende Oberfläche weist bevorzugt eine Fläche in einem Bereich von 1 mm² bis 10 m², oder bevorzugt in einem Bereich von 10 mm² bis 5 m², oder bevorzugt in einem Bereich von 100 mm² bis 1 m² auf. Das Substrat kann rund, kreisförmig, eckig, kegelförmig oder oval ausgestaltet sein. Bevorzugt ist die Form des Substrats ausgewählt aus der Gruppe bestehend aus einer Kugel; einem Kegel; einem Kreis; einem Vielecke wie einem Dreieck, einem Quadrat, einem Rechteck, einem Trapez, einem Fünfeck, einem Sechseck, einem Siebeneck oder einem Achteck; einem Oval oder einer Kombination aus mindestens zwei hieraus. Bevorzugt wird das Substrat von der Mischung beim Aufbringen in Schritt (b) in einem Bereich von 10 bis 100 %, oder bevorzugt in einem Bereich von 20 bis 100 %, oder bevorzugt in einem Bereich von 50 bis 100 %, bezogen auf die gesamte zusammenhängende Oberfläche des Substrats, überlagert. Die Mischung kann flächig auf die Oberfläche des Substrats aufgebracht werden oder in Mustern. So können sich mit der Mischung überlagerte Bereiche auf dem Substrat mit nicht überlagerten Bereichen abwechseln. Das Muster kann eine regelmäßige Form ausweisen, wie ein schachbrettartige, ein wabenförmiges oder ein rautenförmiges Muster. Alternativ oder zusätzlich kann die Mischung in einer unregelmäßigen Form auf das Substrat aufgebracht werden.

An das Aufbringen der Mischung in Schritt (b) unter Erhalt des Vorläufers, schließt sich ein Erhitzen des Vorläufers auf eine Temperatur in Schritt (c) von über 200 °C, bevorzugt von über 400 °C, oder bevorzugt von über 600 °C an. Das Erhitzen kann auf jede Art erfolgen, die der Fachmann für diesen Zweck auswählen würde. Das Erhitzen ist bevorzugt ein Erhitzen mittels einer Methode ausgewählt aus der Gruppe bestehend aus einem Bestrahlen, einem Erhitzen in einem Ofen, einem Erhitzen mit heißem Gas oder einer Kombination aus mindestens zwei hieraus. Die Bestrahlung kann beispielsweise mittel IR-Strahlung, Laserstrahlung, UV-Strahlung oder einer Kombination hieraus erfolgen. Das Erhitzen in einem Ofen kann beispielsweise diskontinuierlich oder kontinuierlich erfolgen. Das Erhitzen mit einem heißen Gas kann beispielsweise durch Überleiten eines heißen Gasstroms wie Luft, Stickstoff, Sauerstoff oder einem Gemisch hieraus erfolgen. Das Erhitzens in Schritt (c) findet bevorzugt für eine Dauer in einem Bereich von 0,5 bis 40 h, oder bevorzugt in einem Bereich von 1 bis 30 h, oder bevorzugt in einem Bereich von 2 bis 20 h statt. Durch das Erhitzen wird ein Schichtaufbau erhalten, beinhaltend mindestens das Substrat sowie eine Gold enthaltende Schicht.

In einer bevorzugten Ausgestaltung des Verfahrens beträgt die Viskosität der Mischung weniger als 40 mPas, bevorzugt weniger als 30 mPas, oder bevorzugt weniger als 20 mPas. Die Viskosität wurde bei einer Schergeschwindigkeit von 1/200 s ermittelt.

In einer bevorzugten Ausgestaltung des Verfahrens erfolgt das Erhitzen des Vorläufers in Schritt (c) bei einer Temperatur in einem Bereich von 250 bis 1100 °C. Temperaturen in einem Bereich von 800 bis über 1000 °C werden insbesondere zur Herstellung von keramischen Materialien mit schwer aufzuschmelzenden Bestandteilen wie Zirkoniumoxid eingesetzt.

In einer bevorzugten Ausgestaltung des Verfahrens erfolgt das Erhitzen des Vorläufers in Schritt (c) bei einer Temperatur in einem Bereich von 500 bis 1000 °C. Bevorzugt wird dieser Temperaturbereich gewählt, wenn es sich bei dem Substrat um ein keramisches Material, zum Beispiel zur Herstellung einer Fliese handelt. Handelt es sich bei dem herzustellenden Schichtaufbau beispielsweise um eine Fliese, so wird der Vorläufer in Schritt (c) auf eine Temperatur von 800 °C erhitzt.

In einer bevorzugten Ausgestaltung des Verfahrens erfolgt das Erhitzen des Vorläufers in Schritt (c) bei einer Temperatur in einem Bereich von 470 bis 900 °C. Bevorzugt wird dieser Temperaturbereich gewählt, wenn es sich bei dem Substrat um ein Glas handelt.

In einer bevorzugten Ausgestaltung des Verfahrens weist das Substrat eine Leitfähigkeit von weniger als 10¹³ S/cm auf. Bevorzugt weist das Substrat eine elektrische Leitfähigkeit in einem Bereich von 10³ S/cm bis 10⁻¹³ S/cm oder in einem Bereich von 10² S/cm bis 10⁻¹⁰ S/cm oder in einem Bereich von 10¹ S/cm bis 10⁻⁸ S/cm auf.

Das Substrat auf das die Mischung wie zuvor beschrieben aufgebracht wird, kann jedes Material sein, das der Fachmann für die Herstellung eines Schichtaufbaus verwenden würde.

In einer bevorzugten Ausgestaltung des Verfahrens ist das Substrat ausgewählt aus der Gruppe bestehend aus einem Glas, einem Stein, einem Beton, einer Keramik, wie Irdenware, Steingut, Steinzeug oder Porzellan, oder einer Kombination aus mindestens zwei davon. Das Glas kann jedes Glas sein, das der Fachmann für das Substrat in einem Schichtaufbau auswählen würde. Das Glas ist bevorzugt ausgewählt aus der Gruppe bestehend aus einem Alkaliglas, einem Nichtalkaliglas, einem Silikatglas oder einer Mischung aus mindestens zwei hiervon. Bevorzugt ist das Glas ausgewählt aus der Gruppe bestehend aus einem Kalknatronglas, einem Bleialkaliglas, Borsilikatglas, Aluminiumsilikatglas, Quarzglas oder einer Mischung aus mindestens zwei hiervon.

Der Stein kann jeder natürliche oder künstliche Stein sein, den der Fachmann für das Substrat in einem Schichtaufbau auswählen würde. Natürliche Steine können alle Steinarten sein, die geologischen Ursprungs sind, beispielsweise Tuff, Sandstein, Basalt, Gips, Granit, Marmor, Schiefer, Edelsteine, Halbedelsteine, wie Alabaster oder Quarze, oder mindestens zwei davon. Ein künstlicher Stein kann jeder Stein sein, der auf jede bekannte Art nicht geologischen Ursprungs ist. Beispiele für künstliche Steine sind Ziegel, Klinker, Kalksandsteine oder mindestens zwei davon.

Der Beton kann jede Betonmischung sein, die der Fachmann für das Substrat in einem Schichtaufbau auswählen würde. Bevorzugt ist der Beton eine Mischung aus einer Gesteinskörnung und einem Bindemittel. Die Gesteinskörnung ist bevorzugt Kies oder Sand oder eine Mischung hieraus. Das Bindemittel ist meist Zement. Bevorzugt ist der Beton ausgewählt aus der Gruppe bestehend aus Stahlbeton, Spannbeton oder Faserbeton oder einer Kombination aus mindestens zwei hiervon.

Die Keramik kann jedes keramische Material sein, das der Fachmann für das Substrat in einem Schichtaufbau auswählen würde. Bevorzugt ist die Keramik ausgewählt aus der Gruppe bestehend aus einer Oxidkeramik, einer Silikatkeramik, einer Nichtoxid-Keramik oder einer Mischung aus mindestens zwei davon.

Die Oxidkeramik ist bevorzugt ausgewählt aus der Gruppe bestehend aus einem Metalloxid, einem Halbmetalloxid oder einer Mischung davon. Das Metall des Metalloxids kann ausgewählt sein aus der Gruppe bestehend aus Aluminium, Beryllium, Barium, Calcium, Magnesium, Natrium, Kalium, Eisen, Zirkonium, Titan, Zink, Zinn oder einer Mischung von mindestens zwei davon. Das Metalloxid ist bevorzugt ausgewählt aus der Gruppe bestehend aus Aluminiumoxid (Al₂O₃), Calciumoxid, Natriumoxid, Kaliumoxid, Magnesiumoxid (MgO), Siliciumoxid (SiO₂), Zirkoniumoxid (ZrO₂), Yttriumoxid (Y₂O₃), Aluminiumtitanat (Al₂TiO₅) oder einer Mischung von mindestens zwei hiervon. Das Halbmetall des Halbmetalloxids ist bevorzugt ausgewählt aus der Gruppe bestehend aus Bor, Silicium, Arsen, Tellur, Blei, Wismut oder einer Mischung von mindestens zwei davon.

Die Silikatkeramik ist bevorzugt ausgewählt aus der Gruppe bestehend aus einem Steatit (Mg₃[Si₄O₁₀(OH)₂]), Cordierit (Mg,Fe²⁺)₂(Al₂Si)^{[4]}[Al₂Si₄O₁₈]), Mullit (Al₂Al₂₊₂ₓSi₂₋₂ₓO₁₀₋ₓ mit x = Sauerstoffleerstellen pro Elementarzelle), Feldspat (Ba,Ca,Na,K,NH₄)(Al,B,Si)₄O₈) oder einer Mischung aus mindestens zwei davon. Bevorzugt ist die Silikatkeramik ein Porzellan.

Die Nichtoxid-Keramik kann ausgewählt sein aus der Gruppe bestehend aus einem Carbid, einem Nitrid oder einer Mischung daraus. Das Carbid kann ausgewählt sein aus der Gruppe bestehend aus Siliciumcarbid (SiC), Borcarbid (B₄C), Titancarbid (TiC), Wolframcarbid, Zementit (Fe₃C) oder einer Mischung aus mindestens zwei hiervon. Das Nitrid kann ausgewählt sein aus der Gruppe bestehend aus Siliciumnitrid (Si₃N₄), Aluminiumnitrid (AIN), Siliciumaluminiumoxinitrid (SIALON) oder einer Mischung aus mindestens zwei hiervon.

Ein Vorläufer eines Schichtaufbaus istgemäß den Verfahrensschritten (a) und (b) des zuvor beschriebenen Verfahrens erhältlich.

Bevorzugt weist der Vorläufer mindestens eine der folgenden Eigenschaften auf:
(E1) eine Dicke des Substrates in einem Bereich von 0,1 mm bis 5cm;
(E2) eine Dicke der in Schritt (b) aufgebrachten Mischung in einem Bereich von 0,01 µm bis 5 µm;
(E3) eine Leitfähigkeit des Substrats von weniger als 10¹³ S/cm;
(E4) eine Leitfähigkeit der in Schritt (b) aufgebrachten Mischung in einem Bereich von 10⁻² S/cm bis 10⁻⁸ S/cm.

Ein ein Schichtaufbau ist nach dem zuvor beschriebenen Verfahren erhältlich.

Bevorzugt weist der Schichtaufbau mindestens eine der folgenden Eigenschaften auf:
(e1) Der Schichtaufbau weist eine mindestens 70 Gewichtsprozent Gold beinhaltende Metallschicht mit einer Dicke in einem Bereich von 0,05 µm bis 1 mm auf;
(e2) eine Dicke in einem Bereich von 0,1 mm bis 5 cm;
(e3) eine Leitfähigkeit von mehr als 10¹³ S/cm;
(e4) einen Glanz in einem Bereich von 800 bis 1500 Glanzeinheiten (GE), bevorzugt in einem Bereich von 500 bis 1300 GE;
(e5) eine Dichte in einem Bereich von 1,1 bis 1,3 kg/l.

Ein Gegenstand beinhaltend einen zuvor beschriebenen Schichtaufbau oder einen Schichtaufbau ist erhältlich nach dem zuvor beschriebenen Verfahren. Der Gegenstand kann jeder Gegenstand sein, den der Fachmann hierfür auswählen würde. Der Gegenstand kann ausgewählt sein aus der Gruppe bestehend aus einer Glasscheibe, einer Fliese, einer Steinplatte, einer Metallplatte, einer Holzplatte, einer Kunststoffplatte oder -folie, einer Vase, einem Teller, einer Tasse, einem Becher oder einer Kombination aus mindestens zwei hiervon.

Die Erfindung wird nun anhand von nicht limitierenden Beispielen und beispielhaften Figuren näher erläutert.

### BEISPIELE

Es wurden verschiedene Mischungen, deren Zusammensetzungen in den Tabellen 1 und 2 dargestellt sind, hergestellt und auf Substrate gedruckt.

**Tabelle 1: Zusammensetzung der Mischungen gemäß den Beispielen 1 - 4 und Vergleichsbeispiel 1. Die Zahlenangaben beziehen sich auf die Masse der einzelnen Bestandteile in Gramm. V = (a) / (b), wobei (a) der Anteil an 1-Heptanol und (b) der Anteil an Gold des Goldthiolats, jeweils bezogen auf das Gesamtgewicht der Mischung, ist.**

| *Beispiel* | *1* | *2* | *3* | | *4* |
|---|---|---|---|---|---|
| *Vergleichsbeispiel* | | | | *1* | |
| Gold(I)-tert-dodecylmercaptan [davon Gold] | 31,25 [15,00] | 31,25 [15,00] | 31,25 [15,00] | 31,25 [15,00] | - |
| Gold(I)-pinanylmercaptan [davon Gold] | - | - | - | - | 19,91 [10,00] |
| 1-Heptanol | 64,95 | 37,50 | 34,50 | 31,50 | 67,00 |
| Rhodiumtriisononylcarboxylat-Lösung | 1,75 | 1,75 | 1,75 | 1,75 | 1,75 |
| Additivgemisch | 2,05 | 2,05 | 2,05 | 2,05 | 2,05 |
| Toluol | - | 27,45 | 30,45 | 33,45 | 9,29 |
| V | 4,33 | 2,50 | 2,30 | 2,10 | 6,70 |

**Tabelle 2: Zusammensetzung der Mischungen gemäß den Beispielen 5 - 9 und den Vergleichsbeispielen 2 - 5. Die Zahlenangaben beziehen sich auf die Masse der einzelnen Bestandteile in Gramm. V = (a) / (b), wobei (a) der Anteil am aufgelisteten Lösungsmittel und (b) der Anteil an Gold des Goldthiolats, jeweils bezogen auf das Gesamtgewicht der Mischung, ist.**

| *Beispiel* | *5* | *6* | *7* | *8* | *9* | | | | |
|---|---|---|---|---|---|---|---|---|---|
| *Vergleichs beispiel* | | | | | | *2* | *3* | *4* | *5* |
| Gold(I)-tert-dodecylmercapt an [davon Gold] | 20,83 [10,00] | 20,83 [10,00] | 20,83 [10,00] | 20,83 [10,00] | 31,25 [15,00] | 20,83 [10,00] | 20,83 [10,00] | 20,83 [10,00] | 20,83 [10,00] |
| Silber(I)-tert-dodecylmercapt an [davon Gold] | - | - | - | - | 3,00 [1,00] | - | - | - | - |
| 1-Heptanol | 78,00 | - | - | - | 62,12 | - | - | - | - |
| 1-Hexanol | - | 78,00 | - | - | - | - | - | - | - |
| 1-Butanol | - | - | 78,00 | - | - | - | - | - | - |
| 2-Butanol | - | - | - | 78,00 | - | - | - | - | - |
| 1-Octan | - | - | - | - | - | 78,00 | - | - | - |
| Cyclohexan | - | - | - | - | - | - | 78,00 | | - |
| Methylisobutylketon | - | - | - | - | - | - | - | 78,00 | |
| Diethylenglykol diethylether | - | - | - | - | - | - | - | - | 78,00 |
| Rhodiumtriisononylcarboxylat -Lösung | 0,50 | 0,50 | 0,50 | 0,50 | 1,75 | 0,50 | 0,50 | 0,50 | 0,50 |
| Additivgemisch | 0,67 | 0,67 | 0,67 | 0,67 | 1,88 | 0,67 | 0,67 | 0,67 | 0,67 |
| V | 7,80 | 7,80 | 7,80 | 7,80 | 4,14 | 7,80 | 7,80 | 7,80 | 7,80 |

### Herstellung von Gold(I)-tert-dodecylmercaptan:

In einem 2 l Becherglas wurden 240,0 g entionisiertes Wasser, 240,0 g Eis (aus entionisiertem Wasser) und 73,07g DL-Methionin eingewogen und unter Rühren gemischt. Über einen Tropftrichter wurden dieser Mischung 128,0 g Gold(l)chloridlösung (Goldgehalt = 37,5 Gewichtsprozent) bei einer Temperatur von 0 - 10 °C unter Rühren zugetropft. Es entstand eine klare farblose Lösung. Nach beendeter Zugabe wurde zu dieser Lösung eine Mischung aus 47,48 g tert-Dodecylmercaptan mit 112 g Methylenchlorid unter Rühren schnell zugegeben. Zur Vervollständigung der Reaktion wurde noch 30 Minuten weitergerührt. Es entstanden zwei Phasen, und zwar eine obere fast farblose wässrige Phase und eine untere gelbliche organische Phase. Die beiden Phasen wurden voneinander getrennt. Die organische Phase wurde dreimal mit je 240 g entionisiertem Wasser gewaschen. Anschließend wurde die organische Phase langsam unter Rühren in 630 g Methanol gegeben. Nach beendeter Zugabe wurde noch 45 Minuten weiter gerührt. Dabei entstand ein grobkörniger gelblicher Niederschlag. Es wurde gewartet, bis sich der Niederschlag vollständig absetzte. Der Niederschlag wurde danach zweimal mit je 350 g Methanol gewaschen, abgenutscht und mehrere Tage an Luft getrocknet.

### Herstellung der Mischungen der Beispiele 1 - 4 und von Vergleichsbeispiel 1:

In einem 250 ml Becherglas wurden 31,25 g Gold(I)-tert-dodecylmercaptan (entsprechend einer Menge an Gold von 15,00 g; Beispiele 1 - 3 und Vergleichsbeispiel 1) bzw 19,91 g Gold(I)-pinanylmercaptan (entsprechend einer Menge an Gold von 10,00 g; Beispiel 4) und die in Tabelle 1 angegebenen Mengen an 1-Heptanol eingewogen und bei Raumtemperatur unter Rühren gelöst. Diese Lösung wurde mit 1,75 g einer Lösung von Rhodiumtriisononylcarboxylat in 1-Heptanol (enthaltend 28 Gewichtsprozent Rhodium(III)-triisononylcarboxylat und 72 Gewichtsprozent 1-Heptanol) und 2,05 g eines Additivgemischs versetzt und gerührt. Bei dem Additivgemisch handelte es sich um ein auf dem technischen Gebiet übliches Additivgemisch, in dem 175 Gewichtsteile einer Lösung von Bismutethylhexanoat (enthaltend 80 - 90 Gewichtsprozent Bismutethylhexanoat, 10 - 15 Gewichtsprozent Shellsol A und <5 Gewichtsprozent Ethylhexansäure, Gehalt an Bismut = 20 Gewichtsprozent bezogen auf das Gewicht der Lösung von Bismutethylhexanoat; Fa. Wilhelm Priem GmbH & Co. KG, Bielefeld) und 30 Gewichtsteile von BYK-306 (polyethermodifiziertes Polydimethylsiloxan, Fa. Byk-Gardner GmbH, Geretsried, Deutschland) enthalten waren. Wo erforderlich, wurde die Mischung auf 100,00 g mit Toluol aufgefüllt. Anschließend wurde die Mischung durch einen 1,4 µm Filter filtriert.

### Herstellung der Mischungen gemäß den Beispielen 5 - 9 und den Vergleichsbeispielen 2 - 5:

Zur Herstellung der Mischungen gemäß den Beispielen 5 - 9 und den Vergleichsbeispielen 2 - 5 wurden in einem 250 ml Becherglas 20,83 g Gold(I)-tertdodecylmercaptan (entsprechend einer Menge an Gold von 10,00 g) bzw für Beispiel 9 31,25 g Gold(I)-tert-dodecylmercaptan (entsprechend einer Menge an Gold von 15,00 g) und 3,00 g Silber(I)-tertdodecylmercaptan (entsprechend einer Menge an Silber von 1,00 g) sowie die Lösungsmittel gemäß Tabelle 2 in der dort angegebenen Menge eingewogen und bei Raumtemperatur unter Rühren gelöst. Diese Lösung wurde mit der jeweils angegebenen Menge einer Lösung von Rhodiumtriisononylcarboxylat in 1-Heptanol (enthaltend 28 Gewichtsprozent Rhodium(III)-triisononylcarboxylat und 72 Gewichtsprozent 1-Heptanol) versetzt, mit einem Additivgemisch auf 100,00 g aufgefüllt und gerührt. Bei dem Additivgemisch handelte es sich um ein auf dem technischen Gebiet übliches Additivgemisch, in dem 175 Gewichtsteile einer Lösung von Bismutethylhexanoat (enthaltend 80 - 90 Gewichtsprozent Bismutethylhexanoat, 10 - 15 Gewichtsprozent Shellsol A und <5 Gewichtsprozent Ethylhexansäure, Gehalt an Bismut = 20 Gewichtsprozent bezogen auf das Gewicht der Lösung von Bismutethylhexanoat; Fa. Wilhelm Priem GmbH & Co. KG, Bielefeld) und 30 Gewichtsteile von BYK-306 (polyethermodifiziertes Polydimethylsiloxan, Fa. Byk-Gardner GmbH, Geretsried, Deutschland) enthalten waren. Anschließend wurde die Mischung durch einen 1,4 µm Filter filtriert.

### Drucken einer Mischung auf ein Substrat und Herstellung eines Schichtaufbaus:

Die Mischungen gemäß den Tabellen 1 und 2 wurden mittels Tintenstrahldrucker auf Substrate gedruckt und anschließend eingebrannt.

Als Substrate wurden glasierte Fliesen (Boizenburg Fliesen GmbH) 0,5 cm dick und 15x20 cm Außenmaß verwendet. Die glasierten Fliesen haben eine glatte, glänzende und dichte Oberfläche. Die Digitaldrucke wurden mit einem INK-Jet Tester 70/1 der Firma Projecta Engineering S.p.A. bei einer Temperatur von 45°C und einer Basisspannung von 18,0 V und einem Offset von 4,5 V ausgeführt. Der Druckkopf war ein Xaar 1001, kommerziell erhältlich von der Xaar Plc.

Die auf Fliesen gedruckte Schicht wurde eingebrannt, indem die Proben in einem Ofen der Firma Nabertherm GmbH, Typ LH 60/13 bei einer Maximaltemperatur von 780 bei einer Aufheizzeit von 45 Minuten und einer Haltezeit von 10 Minuten behandelt wurden und nach Ende der Haltezeit über 4 Stunden in dem abgeschalteten Ofen auf Raumtemperatur abgekühlt wurden.

### Bewertung der Mischungen:

Die Mischungen der Beispiele und Vergleichsbeispiele wurden im Hinblick auf Korrosionsbeständigkeit beim Drucken mittels Tintenstrahldrucker, Stabilität und Druckbarkeit mittels Tintenstrahldrucker untersucht und bewertet. Die Ergebnisse sind in Tabelle 3 dargestellt. Es bedeuten
- im Hinblick auf Korrosionsbeständigkeit beim Drucken mittels Tintenstrahldrucker: "+++": Beim Drucken war keine Abscheidung von Gold an Metallteilen des Tintenstrahldruckers erkennbar; "---" an den Metallteilen des Tintenstrahldruckers schieden sich inakzeptable Mengen an Gold ab;
- im Hinblick auf Stabilität: "+++": Bei der Lagerung für 7 Tage bei 25°C erfolgte keine Entmischung; "---": Bei der Lagerung für 7 Tage bei 25°C kam es zu einer deutlichen Entmischung, die einen Einsatz für den Tintenstrahldruck unmöglich macht;
- im Hinblick auf Druckbarkeit mittels Tintenstrahldrucker: "+++": Die Mischung ließ sich mit dem Tintenstrahldrucker problemlos drucken; "---" Die Mischung war mittels Tintenstrahldrucker nicht druckbar.

**Tabelle 3: Korrosionsbeständigkeit beim Drucken mittels Tintenstrahldrucker, Stabilität und Druckbarkeit mittels Tintenstrahldrucker der Mischungen gemäß den Beispielen und Vergleichsbeispielen.**

| Beispiel | Korrosionsbestän digkeit | Stabilität | Druckbarkeit |
|---|---|---|---|
| Beispiel 1 | +++ | +++ | +++ |
| Beispiel 2 | +++ | +++ | +++ |
| Beispiel 3 | ++ | +++ | +++ |
| Beispiel 4 | +++ | +++ | +++ |
| Beispiel 5 | +++ | +++ | +++ |
| Beispiel 6 | + | ++ | +++ |
| Beispiel 7 | + | + | +++ |
| Beispiel 8 | ++ | + | +++ |
| Beispiel 9 | +++ | +++ | +++ |
| Vergleichsbeispiel 1 | - | +++ | +++ |
| Vergleichsbeispiel 2 | --- | - | -- |
| Vergleichsbeispiel 3 | ++ | +++ | -- |
| Vergleichsbeispiel 4 | ++ | +++ | - |
| Vergleichsbeispiel 5 | ++ | ++ | - |

### FIGUREN

Es zeigen:
- Figur 1: Eine schematische Darstellung der Verfahrensschritte eines erfindungsgemäßen Verfahrens;
- Figur 2a: eine schematische Darstellung eines erfindungsgemäßen Vorläufers;
- Figur 2b: eine schematische Darstellung eines Schichtaufbaus;
- Figur 2c: eine schematische Darstellung eines Gegenstands mit einem Schichtaufbau.

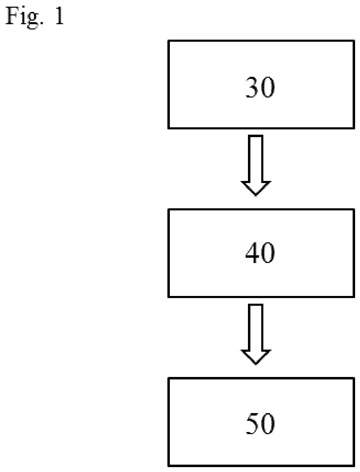

In Figur 1 sind schematisch die Schritte des erfindungsgemäßen Verfahrens dargestellt. In Schritt (a) 30 wird die Mischung 6 aus Beispiel 1 in einem Behälter bereitgestellt. In Schritt (b) 40 wird die Zusammensetzung 6 auf ein Substrat 4, beispielsweise in Form eine Fliese mit den Maßen 20 x 15 cm mit einer Düse eines Tintenstrahldruckers mittels Digitaldruck aufgebracht. Die Nassfilmdicke der Mischung 6 beträgt 10 - 20 µm. Das Substrat 4 zusammen mit der Mischung 6 bildet den Vorläufer 12. Das Substrat 4 zusammen mit der Mischung 6 wird in Schritt (c) 50 in einem handelsüblichen Brennofen der Firma Nabertherm, Typ LH60/13 bei 750 °C gebrannt. Hierbei wird aus der Mischung 6 eine Goldschicht, gelbe Schicht oder Weißgoldschicht 8 gebildet und auf diese Weise ein Schichtaufbau 2 erhalten.

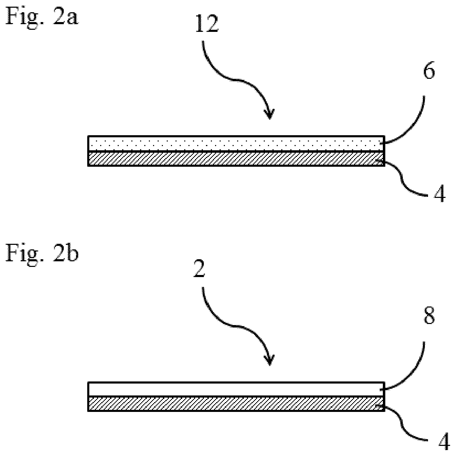

In Figur 2a ist ein Vorläufer 12 gezeigt, der aus einem Substrat 4 besteht, auf das eine Mischung 6 aufgebracht wurde. Das Substrat 4 kann beispielsweise ein Glas oder eine Keramik sein.

In Figur 2b ist ein Schichtaufbau 12 gezeigt, der aus einem Substrat 4 besteht, auf dem eine Metallschicht 8, vorzugsweise eine Goldschicht, gelbe Schicht oder Weißgoldschicht, gebildet worden ist.

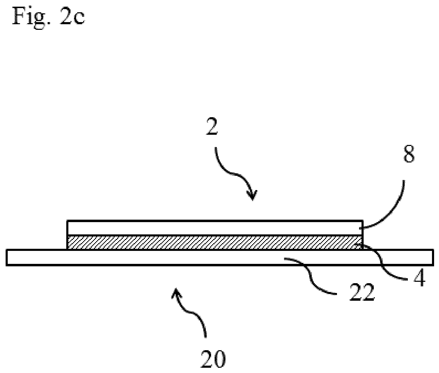

Figur 2c zeigt einen Gegenstand 20 bestehend aus einer Schicht 22, auf die ein Schichtaufbau 2 aufgebracht wurde. Der Schichtaufbau 2 beinhaltet das Substrat 4 sowie die Goldschicht, gelbe Schicht oder Weißgoldschicht 8. Der Schichtaufbau 2 kann die gleichen Maße und Materialien aufweisen, wie unter Figur 2a und 2b beschrieben.

### BEZUGSZEICHENLISTE

- 2: Schichtaufbau
- 4: Substrat
- 6: Zusammensetzung
- 8: Metallschicht / Goldschicht / gelbe Schicht / Weißgoldschicht
- 12: Vorläufer
- 20: Gegenstand
- 22: Schicht
- 30: Schritt (a)
- 40: Schritt (b)
- 50: Schritt (c)

## Patentansprüche

1. Mischung enthaltend
(i) ein Goldthiolat,
(ii) eine Rhodium(III)-Verbindung und
(iii) ein Lösungsmittel, welches 4-10 Kohlenstoffatome und wenigstens eine OH-Gruppe aufweist,
**dadurch gekennzeichnet, dass** die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung ist.

2. Mischung nach Anspruch 1, **dadurch gekennzeichnet, dass** die Mischung wenigstens 5,0 Gewichtsprozent Gold, mehr bevorzugt wenigstens 6,0 Gewichtsprozent Gold und noch mehr bevorzugt wenigstens 7,0 Gewichtsprozent Gold enthält.

3. Mischung nach Anspruch 1 oder 2, **dadurch gekennzeichnet, dass** das Goldthiolat aus der Gruppe ausgewählt ist, die aus aliphatischen Goldthiolaten, heteroaliphatischen Goldthiolaten und aromatischen Goldthiolaten besteht.

4. Mischung nach Anspruch 3, **dadurch gekennzeichnet, dass** das Goldthiolat wenigstens 5 Kohlenstoffatome, mehr bevorzugt wenigstens 6 Kohlenstoffatome und noch mehr bevorzugt 7 Kohlenstoffatome aufweist.

5. Mischung nach Anspruch 4, **dadurch gekennzeichnet, dass** das Kohlenstoffatom in α-Stellung zur Thiolgruppe des Thiolatrestes im Goldthiolat ein sekundäres oder tertiäres Kohlenstoffatom ist.

6. Mischung nach Anspruch 5, **dadurch gekennzeichnet, dass** das tertiäre Kohlenstoffatom mit drei aliphatischen oder heteroaliphatischen Resten verbunden ist, wobei einer der aliphatischen oder heteroaliphatischen Resten wenigstens 4 Kohlenstoffatome aufweist und zwei der aliphatischen oder heteroaliphatischen Reste nicht mehr als 3 Kohlenstoffatome aufweisen.

7. Mischung nach Anspruch 6, **dadurch gekennzeichnet, dass** das Goldthiolat durch die Formel Au(I)-R¹ dargestellt ist, wobei R¹ für den Rest -S-C(CH₃)₂-C₉H₁₉ steht.

8. Mischung nach einem der vorangegangenen Ansprüche, **dadurch gekennzeichnet, dass** die Rhodium(III)-Verbindung durch die Formel Rh(III)-R²R³R⁴ dargestellt ist, wobei R², R³ und R⁴ unabhängig voneinander für aliphatische oder heteroaliphatische Reste stehen.

9. Mischung nach Anspruch 8, **dadurch gekennzeichnet, dass** wenigstens einer der Reste R², R³ und R⁴ ein Carboxylatrest ist.

10. Mischung nach einem der vorangegangenen Ansprüche, **dadurch gekennzeichnet, dass** die Rhodium(III)-Verbindung wenigstens 7 Kohlenstoffatome und mehr bevorzugt 7 - 52 Kohlenstoffatome aufweist.

11. Mischung nach Anspruch 10, **dadurch gekennzeichnet, dass** die die Rhodium(III)-Verbindung Rhodiumtriisononylcarboxylat ist.

12. Mischung nach einem der vorangegangenen Ansprüche, **dadurch gekennzeichnet, dass** das Lösungsmittel ein hydroxyaliphatisches Lösungsmittel ist.

13. Mischung nach einem der vorangegangenen Ansprüche, **dadurch gekennzeichnet, dass** das Lösungsmittel ein azyklisches Lösungsmittel ist.

14. Mischung nach einem der vorangegangenen Ansprüche, **dadurch gekennzeichnet, dass** das Lösungsmittel ein Alkohol ist.

15. Mischung nach Anspruch 14, **dadurch gekennzeichnet, dass** der Alkohol ein Monoalkohol ist.

16. Mischung nach einem der vorangegangenen Ansprüche, **dadurch gekennzeichnet, dass** das Lösungsmittel aus der Gruppe ausgewählt ist, die aus 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 2-Octanol, 3-Octanol und 4-Octanol besteht.

17. Mischung nach einem der vorangegangenen Ansprüche, **dadurch gekennzeichnet, dass** das Lösungsmittel 1-Heptanol ist.

18. Mischung nach einem der vorangegangenen Ansprüche, **dadurch gekennzeichnet, dass** das Verhältnis V im Bereich von 2,3 - 18, mehr bevorzugt im Bereich von 2,5 - 18 und noch mehr bevorzugt im Bereich von 2,5 - 10 liegt.

19. Mischung nach einem der vorangegangenen Ansprüche, **dadurch gekennzeichnet, dass** die Mischung (iv) ein Silberthiolat enthält.

20. Mischung nach einem der vorangegangenen Ansprüche, **dadurch gekennzeichnet, dass** die Mischung (v) eine Palladium- oder Platinverbindung enthält, die aus der Gruppe ausgewählt ist, die aus Palladiumthiolaten, Palladiumcarboxylaten, Platinthiolaten und Platincarboxylaten besteht.

21. Mischung nach einem der vorangegangenen Ansprüche, **dadurch gekennzeichnet, dass** der maximale Anteil an Halogenidverbindungen 0,1 Gewichtsprozent, bezogen auf das Gesamtgewicht der Mischung, beträgt.

22. Mischung nach einem der vorangegangenen Ansprüche, **dadurch gekennzeichnet, dass** der maximale Anteil an Fettsäuren 5,0 Gewichtsprozent, bezogen auf das Gesamtgewicht der Mischung, beträgt.

23. Verfahren zur Herstellung eines Schichtaufbaus (2) beinhaltend die Schritte:
(a) Bereitstellung einer Mischung (6) enthaltend
(i) ein Goldthiolat,
(ii) eine Rhodium(III)-Verbindung und
(iii) ein Lösungsmittel, das 4-10 Kohlenstoffatome und wenigstens eine OH-Gruppe aufweist,
wobei die Mischung ein Verhältnis V = (a) / (b) ≥ 2,2 aufweist, wobei (a) der Anteil an Lösungsmittel (iii) und (b) der Anteil an Gold des Goldthiolats (i), jeweils bezogen auf das Gesamtgewicht der Mischung, ist,
(b) Aufbringen der Mischung durch eine Düse auf ein Substrat (4) unter Erhalt eines Vorläufers (12) und
(c) Erhitzen des Vorläufers (12) auf eine Temperatur von über 200°C unter Erhalt des Schichtaufbaus (2).

## Claims

1. A Mixture containing
(i) a gold thiolate,
(ii) a rhodium(III) compound, and
(iii) a solvent comprising 4-10 carbon atoms and at least one OH group,
**characterised in that** the mixture comprises a ratio V = (a) / (b) ≥ 2.2, whereby (a) is the fraction of solvent (iii) and (b) is the gold fraction of the gold thiolate (i), each relative to the total weight of the mixture.

2. The mixture according to claim 1, **characterised in that** the mixture contains at least 5.0% by weight of gold, more preferably at least 6.0% by weight of gold, and even more preferably at least 7.0% by weight of gold.

3. The mixture according to claim 1 or 2, **characterised in that** the gold thiolate is selected from the group consisting of aliphatic gold thiolates, heteroaliphatic gold thiolates, and aromatic gold thiolates.

4. The mixture according to claim 3, **characterised in that** the gold thiolate comprises at least 5 carbon atoms, more preferably at least 6 carbon atoms, and even more preferably at least 7 carbon atoms.

5. Mixture according to claim 4, **characterised in that** the carbon atom in α position with respect to the thiol group of the thiolate residue in the gold thiolate is a secondary or tertiary carbon atom.

6. The mixture according to claim 5, **characterised in that** the tertiary carbon atom is connected to three aliphatic or heteroaliphatic residues, whereby one of the aliphatic or heteroaliphatic residues comprises at least 4 carbon atoms and two of the aliphatic or heteroaliphatic residues comprise no more than 3 carbon atoms.

7. The mixture according to claim 6, **characterised in that** the gold thiolate is represented by the formula Au(I)-R¹, whereby R¹ is the -S-C(CH₃)₂-C₉H₁₉ residue.

8. The mixture according to any one of the preceding claims, **characterised in that** the rhodium(III) compound is represented by the formula Rh(III)-R²R³R⁴, whereby R², R³, and R⁴, independent of each other, are aliphatic or heteroaliphatic residues.

9. The mixture according to claim 8, **characterised in that** at least one of the residues R², R³, and R⁴ is a carboxylate residue.

10. The mixture according to any one of the preceding claims, **characterised in that** the rhodium(III) compound comprises at least 7 carbon atoms and more preferably 7 - 52 carbon atoms.

11. The mixture according to claim 10, **characterised in that** the rhodium(III) compound is rhodium triisononyl carboxylate.

12. The mixture according to any one of the preceding claims, **characterised in that** the solvent is a hydroxy-aliphatic solvent.

13. The mixture according to any one of the preceding claims, **characterised in that** the solvent is an acyclic solvent.

14. The mixture according to any one of the preceding claims, **characterised in that** the solvent is an alcohol.

15. The mixture according to claim 14, **characterised in that** the alcohol is a monoalcohol.

16. The mixture according to any one of the preceding claims, **characterised in that** the solvent is selected from the group consisting of 1-butanol, 2-butanol, 1-pentanol, 2-pentanol, 3-pentanol, 1-hexanol, 2-hexanol, 3-hexanol, 1-heptanol, 2-heptanol, 3-heptanol, 4-heptanol, 1-octanol, 2-octanol, 3-octanol, and 4-octanol.

17. The mixture according to any one of the preceding claims, **characterised in that** the solvent is 1-heptanol.

18. The mixture according to any one of the preceding claims, **characterised in that** the ratio V is in the range of 2.3 - 18, more preferably in the range of 2.5 - 18, and even more preferably in the range of 2.5 - 10.

19. The mixture according to any one of the preceding claims, **characterised in that** the mixture (iv) contains a silver thiolate.

20. The mixture according to any one of the preceding claims, **characterised in that** the mixture (v) contains a palladium or platinum compound selected from the group consisting of palladium thiolates, palladium carboxylates, platinum thiolates, and platinum carboxylates.

21. The mixture according to any one of the preceding claims, **characterised in that** the maximum fraction of halide compounds is 0.1% by weight, relative to the total weight of the mixture.

22. The mixture according to any one of the preceding claims, **characterised in that** the maximum fraction of fatty acids is 5.0% by weight, relative to the total weight of the mixture.

23. A Method for the production of a layer structure (2), containing the steps of:
(a) providing a mixture (6) containing
(i) a gold thiolate,
(ii) a rhodium(III) compound, and
(iii) a solvent comprising 4-10 carbon atoms and at least one OH group,
whereby the mixture comprises a ratio V = (a) / (b) ≥ 2.2, whereby (a) is the fraction of solvent (iii) and (b) is the gold fraction of the gold thiolate (i), each relative to the total weight of the mixture
(b) applying the mixture through a nozzle onto a substrate (4), thereby obtaining a precursor (12), and
(c) heating the precursor (12) to a temperature above 200°C, thereby obtaining the layer structure (2).

## Revendications

1. Mélange contenant
(i) un thiolate d'or,
(ii) un composé de rhodium(III), et
(iii) un solvant qui présente 4 à 10 atomes de carbone et au moins un groupe OH,
**caractérisé en ce que** le mélange présente un rapport V = (a) / (b) ≥ 2,2, dans lequel (a) la proportion de solvant (iii) et (b) la proportion d'or du thiolate d'or (i) sont à chaque fois par rapport au poids total du mélange.

2. Mélange selon la revendication 1, **caractérisé en ce que** le mélange contient au moins 5,0 pourcent en poids d'or, plus préférablement au moins 6,0 pourcent en poids d'or et encore plus préférablement au moins 7,0 pourcent en poids d'or.

3. Mélange selon la revendication 1 ou 2, **caractérisé en ce que** le thiolate d'or est sélectionné parmi le groupe qui se compose de thiolates d'or aliphatiques, thiolates d'or hétéroaliphatiques et thiolates d'or aromatiques.

4. Mélange selon la revendication 3, **caractérisé en ce que** le thiolate d'or présente au moins 5 atomes de carbone, plus préférablement au moins 6 atomes de carbone et encore plus préférablement 7 atomes de carbone.

5. Mélange selon la revendication 4, **caractérisé en ce que** l'atome de carbone en position α par rapport au groupe thiol du groupe fonctionnel de thiolate dans le thiolate d'or est un atome de carbone secondaire ou tertiaire.

6. Mélange selon la revendication 5, **caractérisé en ce que** l'atome de carbone tertiaire est relié à trois groupes fonctionnels aliphatiques ou hétéroaliphatiques, dans lequel un des groupes fonctionnels aliphatiques ou hétéroaliphatiques présente au moins 4 atomes de carbone et deux des groupes fonctionnels aliphatiques ou hétéroaliphatiques ne présentent pas plus de 3 atomes de carbone.

7. Mélange selon la revendication 6, **caractérisé en ce que** le thiolate d'or est représenté par la formule Au(I)-R¹, dans laquelle R¹ représente le groupe fonctionnel -S-C(CH₃)₂-C₉H₁₉.

8. Mélange selon une des revendications précédentes, **caractérisé en ce que** le composé de rhodium(III) est représenté par la formule Rh(III)-R²R³R⁴, dans laquelle R², R³ et R⁴ représentent indépendamment les uns des autres des groupes fonctionnels aliphatiques ou hétéroaliphatiques.

9. Mélange selon la revendication 8, **caractérisé en ce qu'**au moins un des groupes fonctionnels R², R³ et R⁴ est un groupe fonctionnel de carboxylate.

10. Mélange selon une des revendications précédentes, **caractérisé en ce que** le composé de rhodium(III) présente au moins 7 atomes de carbone et plus préférablement 7 à 52 atomes de carbone.

11. Mélange selon la revendication 10, **caractérisé en ce que** le composé de rhodium(III) est le triisononylcarboxylate de rhodium.

12. Mélange selon une des revendications précédentes, **caractérisé en ce que** le solvant est un solvant hydroxyaliphatique.

13. Mélange selon une des revendications précédentes, **caractérisé en ce que** le solvant est un solvant acyclique.

14. Mélange selon une des revendications précédentes, **caractérisé en ce que** le solvant est un alcool.

15. Mélange selon la revendication 14, **caractérisé en ce que** l'alcool est un monoalcool.

16. Mélange selon une des revendications précédentes, **caractérisé en ce que** le solvant est sélectionné parmi le groupe qui se compose du 1-butanol, 2-butanol, 1-pentanol, 2-pentanol, 3-pentanol, 1-hexanol, 2-hexanol, 3-hexanol, 1-heptanol, 2-heptanol, 3-heptanol, 4-heptanol, 1-octanol, 2-octanol, 3-octanol et 4-octanol.

17. Mélange selon une des revendications précédentes, **caractérisé en ce que** le solvant est le 1-heptanol.

18. Mélange selon une des revendications précédentes, **caractérisé en ce que** le rapport V se situe dans la région de 2,3 à 18, plus préférablement dans la région de 2,5 à 18 et encore plus préférablement dans la région de 2,5 à 10.

19. Mélange selon une des revendications précédentes, **caractérisé en ce que** le mélange contient (iv) un thiolate d'argent.

20. Mélange selon une des revendications précédentes, **caractérisé en ce que** le mélange contient (v) un composé de palladium ou de platine qui est sélectionné parmi le groupe qui se compose de thiolates de palladium, carboxylates de palladium, thiolates de platine et carboxylates de platine.

21. Mélange selon une des revendications précédentes, **caractérisé en ce que** la proportion maximale de composés d'halogénure se monte à 0,1 pourcent en poids par rapport au poids total du mélange.

22. Mélange selon une des revendications précédentes, **caractérisé en ce que** la proportion maximale d'acides gras se monte à 5,0 pourcent en poids par rapport au poids total du mélange.

23. Procédé de fabrication d'une structure en couches (2) contenant les étapes de :
(a) mise à disposition d'un mélange (6) contenant
(i) un thiolate d'or,
(ii) un composé de rhodium(III), et
(iii) un solvant qui présente 4 à 10 atomes de carbone et au moins un groupe OH,
dans lequel le mélange présente un rapport V = (a) / (b) ≥ 2,2, dans lequel (a) la proportion de solvant (iii) et (b) la proportion d'or du thiolate d'or (i) sont à chaque fois par rapport au poids total du mélange,
(b) application du mélange par une buse sur un substrat (4) avec obtention d'un précurseur (12), et
(c) chauffage du précurseur (12) à une température supérieure à 200°C avec obtention de la structure en couches (2).
